# EUROPEAN PATENT APPLICATION

(11) **EP 4 832 539 A1**
(43) Date of publication of application: **28.10.2026**
(21) Application number: 24916577.0
(22) Date of filing: 21.11.2024
(51) Int. Cl.: H04W 12/40

(54) **COMMUNICATION METHOD AND COMMUNICATION APPARATUS**

(30) Priority: 11.01.2024 CN 202410048080
(71) Applicant: Huawei Technologies Co., Ltd., Shenzhen, Guangdong 518129 (CN)
(72) Inventor: GUO, Tao, Shenzhen, Guangdong 518129 (CN); WU, Yizhuang, Shenzhen, Guangdong 518129 (CN); SUN, Haiyang, Shenzhen, Guangdong 518129 (CN)
(74) Representative: Goddar, Heinz J.
(86) International application number: PCT/CN2024/133421
(87) International publication number: WO 2025/148527

(57) **Abstract**

This application provides a communication method and a communication apparatus. The method includes: A first network element determines a first entity and a first role, and sends a first request message to the first entity. The first request message is used to request the first entity to perform a first federated learning task in the first role, and the first role indicates a role of the first entity in performing the first federated learning task. According to the method, the first role is sent to the first entity, so that the first entity can effectively perform the first federated learning task in the first role, to improve efficiency of performing the first federated learning task.

## Description

This application claims priority to Chinese Patent Application No. 202410048080.1, filed with the China National Intellectual Property Administration on January 11, 2024 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

Federated learning (Federated Learning, FL) enables multiple participants to achieve collaborative training by exchanging model parameters through security mechanisms without sharing training data. The federated learning includes horizontal federated learning (horizontal federated learning) and vertical federated learning (vertical federated learning). The horizontal federated learning is also referred to as feature-aligned federated learning (feature-aligned federated learning), that is, data features of participants are aligned, and the horizontal federated learning can increase a total quantity of training samples. The vertical federated learning is federated learning that jointly utilizes different data features of common samples across multiple participants, that is, training data of each participant is vertically partitioned. The vertical federated learning is also referred to as sample-aligned federated learning (sample-aligned federated learning), that is, training samples of the participants are aligned, and the vertical federated learning can increase dimensions of training data features. In other words, the federated learning can effectively assist multiple organizations in data utilization and learning modeling while meeting requirements of user privacy protection, data security, and government regulations.

However, current mobile network systems, for example, 5th-generation mobile communication core (5th-generation core, 5GC) networks, do not support creation and execution of vertical federated learning tasks. Therefore, how to effectively perform vertical federated learning tasks is a problem that needs to be considered currently.

### SUMMARY

This application provides a communication method and a communication apparatus, to effectively perform vertical federated learning tasks.

According to a first aspect, a communication method is provided. The method may be performed by a first network element (for example, a task initiator), or may be performed by a chip, a circuit, or a logic module of the first network element. This is not limited in this application. For ease of description, the following provides descriptions by using an example in which the method is performed by the first network element.

The method includes: The first network element determines a first entity and a first role, where the first role indicates a role of the first entity in performing a first federated learning task. The first network element sends a first request message to the first entity, where the first request message is used to request the first entity to perform the first federated learning task in the first role.

The first network element supports initiation of the first federated learning task, or the first network element has a capability of initiating the first federated learning task. For example, the first network element may be a coordinator, an NWDAF, or an AF.

Optionally, the first request message includes the first role.

In other words, the first entity is an entity that has a capability of performing the first federated learning task in the first role.

Optionally, the first federated learning task may be replaced with another name such as first federated learning, a first federated learning function, a first federated learning process (process), or a first federated learning activity. An entity supporting performing the first federated learning task herein may be understood as an entity (or a network element, a device, a node, or the like) having a capability of performing the first federated learning task, or the entity supports performing the first federated learning task (or activity, process, or the like).

For example, the first federated learning task may include one or more of the following: network performance analytics, artificial intelligence (Artificial Intelligence, AI) model training, face recognition, or cross-institutional medical data analytics and disease prediction, or the like. Optionally, the federated learning task in this embodiment of this application may be a vertical federated learning task. For a specific meaning, refer to the foregoing related descriptions.

According to the foregoing solution, after determining the first entity and the first role, the first network element sends the first role to the first entity, so that the first entity can effectively perform the first federated learning task in the first role, to improve efficiency of performing the first federated learning task.

In some implementations, the first role includes a primary participant or a secondary participant, where the primary participant supports providing a label in the first federated learning task, and the label corresponds to the first federated learning task; or the primary participant supports providing a label or a label and data in the first federated learning task. The secondary participant supports providing data in the first federated learning task.

That is, the first entity supports providing a label and/or data in performing the first federated learning task.

The label is used for the first federated learning task, for example, used for model training and/or model evaluation corresponding to the first federated task. The data is used for the first federated learning task, for example, used for analytics, model training, and/or model inference corresponding to the first federated task. The data may be a sample used by the first entity to perform the first federated learning task, for example, traffic data of a terminal on an AF, or service data of the terminal on the AF.

In some implementations, the method further includes: The first network element obtains at least one candidate entity and role information of the at least one candidate entity, where the role information of the at least one candidate entity indicates a role supported by the at least one candidate entity in the first federated learning task. That the first network element determines the first entity and the first role includes: The first network element determines the first entity and the first role from the at least one candidate entity and the role information of the at least one candidate entity.

According to the foregoing solution, the first network element may select or determine the first entity and the first role from the obtained at least one candidate entity and the obtained role information of the at least one candidate entity, that is, find the first entity that is suitable for performing the first federated learning task and the first role, so that the first entity can subsequently effectively perform the first federated learning task in the first role. This improves efficiency of performing federated learning.

In some implementations, that the first network element obtains the at least one candidate entity and the role information of the at least one candidate entity includes: The first network element receives at least one second entity and role information of the at least one second entity from a second network element, where the second network element supports discovery of an entity for performing the first federated learning task, or the second entity supports providing information about the entity for performing the first federated learning task. The at least one second entity supports performing the first federated learning task, and the at least one second entity includes the at least one candidate entity.

In some implementations, that the first network element receives the at least one second entity and the role information of the at least one second entity from the second network element includes: The first network element sends a third request message to the second network element, where the third request message is used to obtain an entity that supports performing the first federated learning task. The first network element receives a third response message from the second network element, where the third response message includes the at least one candidate entity and the role information of the at least one candidate entity.

The entity supporting performing the first federated learning task may be understood as: the entity has a capability of performing the first federated learning task.

Optionally, the third request message includes one or more of the following: multiple types, a first analytics identifier, a first group identifier, information about a vertical federation, a first interoperability indicator, or the like. The type herein is a type of an entity, for example, an AF type and/or an NF type.

According to the foregoing solution, the first network element may obtain the at least one candidate entity and the role information of the at least one candidate entity from the second network element (for example, an entity discovery function network element). The at least one candidate entity may be an AF instance and/or an NF instance determined by the second network element based on the multiple types, or may be an AF instance and/or an NF instance determined by the second network element based on at least one of the first group identifier, the first analytics identifier, or the first interoperability indicator.

In some implementations, before the first network element determines the first entity and the first role, the method further includes: The first network element sends a second request message to the at least one candidate entity, where the second request message is used to request the at least one candidate entity to prepare to perform the first federated learning task. The first network element receives a second response message from the at least one candidate entity, where the second response message indicates that the at least one candidate entity agrees to support performing the first federated learning task in the first role.

For example, if the at least one candidate entity includes the first entity, it indicates that the first network element sends the second request message to the first entity. The second request message is used to request the first entity to prepare to perform the first federated learning task. The first network element receives the second response message from the first entity. The second response message indicates that the first entity agrees to perform or supports performing the first federated learning task in the first role.

In some implementations, the second request message includes at least one role supported by the first entity in the first federated learning task, the at least one role supported by the first entity in the first federated learning task includes the first role, and the at least one supported role includes a primary participant and/or a secondary participant.

Optionally, the second request message includes the first role. Herein, the first role is a role that the first network element requests the first entity to support, or requests the first entity to perform a subsequent first federated learning task in the first role. The role that the first entity is requested to support may be the primary participant and/or the secondary participant.

In some implementations, the second response message includes the first role.

According to the foregoing solution, only when the first network element determines that the first entity agrees to perform the first federated learning task in the first role, the first network element finally determines a participant for performing the first federated learning task and role information of the participant. This helps improve the efficiency of performing the first federated learning task.

In some implementations, the second request message further includes information about a third network element, and the third network element supports coordinating the first entity in performing the first federated learning task.

In some implementations, the method further includes: The first network element obtains the information about the third network element and role information of the third network element, where the role information of the third network element indicates that the third network element supports coordinating the first entity in performing the first federated learning task, or the role information of the third network element indicates that the third network element has a capability of coordinating with the first entity to perform the first federated learning task.

In some implementations, that the first network element obtains the information about the third network element and the role information of the third network element includes: The first network element receives the information about the third network element and the role information of the third network element from the second network element.

Optionally, the first network element may obtain the information about the third network element and the role information of the third network element through signaling configuration or preconfiguration.

In some implementations, the method further includes: The first network element sends a fifth request message to the third network element, where the fifth request message is used to request the third network element to coordinate with the first entity to perform the first federated learning task. The first network element receives a fifth response message from the third network element, where the fifth response message indicates that the third network element agrees to coordinate with the first entity to perform the first federated learning task.

According to the foregoing solution, the first network element and the third network element determine, through information exchange, that the third network element, as a coordinator, coordinates with the first entity to perform the first federated learning task. This helps improve the efficiency of subsequently performing the first federated learning task.

In some implementations, before the first network element sends the first request message to the first entity, the method further includes: The first network element sends a sixth request message to the third network element, where the sixth request message is used to request to create or coordinate the first federated learning task, and the sixth request message includes the first entity and the first role.

According to the foregoing solution, the first network element sends, to the third network element, the first entity that participates in performing the first federated learning task and the first role, that is, determines a role of each first entity in performing the first federated learning task, for example, provides a label and/or data, so that the third network element coordinates with or organizes the first entity to participate in performing the first federated learning task in the first role. This effectively improves the efficiency of performing federated learning.

In some implementations, before the first network element determines the first entity and the first role, the method further includes: The first network element obtains a first analytics identifier, where the first analytics identifier corresponds to the first federated learning task. The first network element determines, based on the first analytics identifier, to trigger the first federated learning task.

According to the foregoing solution, the first network element may determine, based on the first analytics identifier, to initiate the first federated learning task, to determine the first entity for performing the first federated learning task and the role of the first entity for performing the first federated learning task.

For example, that the first network element obtains the first analytics identifier may be: The first network element may receive a subscription request message from a consumer (for example, an NWDAF containing AnLF or an NWDAF containing MTLF). The subscription request message includes the first analytics identifier, and the subscription request message is used to subscribe to federated learning model provisioning or training (for example, subscription request for ML model provisioning/training). The subscription request message may be a model subscription request message or an analytics subscription request message.

For example, the first analytics identifier may be predefined or preconfigured. The predefinition may include a definition provided in advance, for example, a definition in a protocol. The preconfiguration may be implemented by pre-storing corresponding code, table, character string, or another manner indicating the first analytics identifier in the first network element. A specific implementation of the first analytics identifier is not limited in this application.

It should be understood that the first analytics identifier may indicate a specific function or service, and the specific function or service is related to a model, that is, the model may be used to perform the specific function or service, or the model supports performing the specific function or service corresponding to the first analytics identifier. The specific function or service may be network performance analytics or the like. That the first analytics identifier corresponds to the first federated learning task may be understood as follows: The first analytics identifier indicates the first federated learning task.

Optionally, the first network element may alternatively obtain other information, and determine, based on a correspondence between the other information and the first federated learning task, to trigger the first federated learning task. For example, the other information may include one or more of the following: the first group identifier, the first analytics identifier, the first interoperability indicator, a task identifier corresponding to the first federated learning task, or the information about the vertical federation. For specific explanations, refer to the following related descriptions.

According to a second aspect, a communication method is provided. The method may be performed by a second network element (for example, an entity discovery function network element), or may be performed by a chip, a circuit, or a logic module of the second network element. This is not limited in this application. For ease of description, the following provides descriptions by using an example in which the method is performed by the second network element.

The method includes: The second network element receives a third request message, where the third request message is used to obtain an entity that supports performing a first federated learning task, and the second network element supports discovery of an entity for performing the first federated learning task. The second network element determines at least one candidate entity and role information of the at least one candidate entity, where the role information of the at least one candidate entity indicates a role supported by the at least one candidate entity in the first federated learning task. The second network element sends a third response message, where the third response message includes the at least one candidate entity and the role information of the at least one candidate entity.

In some implementations, the third request message includes multiple types, and each of the multiple types corresponds to the at least one candidate entity. The type herein is a type of an entity, for example, an AF type and/or an NF type.

In some implementations, the method further includes: The second network element sends information about a third network element and role information of the third network element to a first network element, where the role information of the third network element indicates that the third network element supports coordinating a first entity in performing the first federated learning task.

In some implementations, the method further includes: The second network element receives a registration request message from at least one second entity, where the registration request message includes role information of the at least one second entity, and the second entity supports performing the first federated learning task. It should be understood that the at least one second entity includes the at least one candidate entity, and the at least one candidate entity includes the first entity.

In some implementations, that the second network element receives the third request message includes: The second network element receives the third request message from the first network element, where the first network element supports initiation of the first federated learning task. Alternatively, the second network element receives the third request message from the third network element, where the third network element supports coordinating the first entity in performing the first federated learning task, and the at least one candidate entity includes the first entity.

For beneficial effect of the second aspect and some implementations, correspondingly refer to the related descriptions of the first aspect. Details are not described herein again.

According to a third aspect, a communication method is provided. The method may be performed by a third network element (for example, a task coordinator), or may be performed by a chip, a circuit, or a logic module of the third network element. This is not limited in this application. For ease of description, the following provides descriptions by using an example in which the method is performed by the third network element.

The method includes: The third network element obtains a first entity and a first role, where the first role indicates a role of the first entity in performing a first federated learning task, and the third network element supports coordinating the first entity in performing the first federated learning task. The third network element sends a seventh request message to the first entity, where the seventh request message is used to request to perform the first federated learning task, and the seventh request message includes the first role.

In some implementations, that the third network element obtains the first entity and the first role includes: The third network element receives the first entity and the first role from a first network element, where the first network element supports initiation of the first federated learning task.

In some implementations, that the third network element receives the first entity and the first role from the first network element includes: The third network element receives a sixth request message from the first network element, where the sixth request message is used to request to create or coordinate the first federated learning task, and the sixth request message includes the first entity and the first role.

In some implementations, before the third network element receives the first entity and the first role information from the first network element, the method further includes: The third network element sends at least one candidate entity and role information of the at least one candidate entity to the first network element, where the role information of the at least one candidate entity indicates a role supported by the at least one candidate entity in the first federated learning task, and the at least one candidate entity includes the first entity.

In some implementations, before the third network element sends the at least one candidate entity and the role information of the at least one candidate entity to the first network element, the method further includes: The third network element receives a fourth request message from the first network element, where the fourth request message is used to request to prepare to perform the first federated learning task. The third network element obtains the at least one candidate entity and the role information of the at least one candidate entity. The third network element sends an eighth request message to the at least one candidate entity, where the eighth request message is used to request the at least one candidate entity to perform the first federated learning task, and the eighth request message includes the role information of the at least one candidate entity. The third network element receives an eighth response message from the at least one candidate entity, where the eighth response message indicates that the at least one candidate entity agrees to support performing the first federated learning task in the role indicated by the role information of the candidate entity.

In some implementations, the eighth request message further includes information about the third network element, and the eighth response message further indicates agreement that the third network element is to negotiate the first federated learning task.

In some implementations, that the third network element obtains the at least one candidate entity and the role information of the at least one candidate entity includes: The third network element receives the at least one candidate entity and the role information of the at least one candidate entity from a second network element, where the second network element supports discovery of an entity for performing the first federated learning task.

In some implementations, that the third network element receives the at least one candidate entity and the role information of the at least one candidate entity from the second network element includes: The third network element sends a third request message to the second network element, where the third request message is used to obtain an entity that supports performing the first federated learning task. The third network element receives a third response message from the second network element, where the third response message includes the at least one candidate entity and the role information of the at least one candidate entity.

In some implementations, before the third network element receives the first entity and the first role from the first network element, the method further includes: The third network element receives a fifth request message from the first network element, where the fifth request message is used to request the third network element to coordinate with the first entity to perform the first federated learning task. The third network element sends a fifth response message to the first network element, where the fifth response message indicates that the third network element agrees to coordinate with the first entity to perform the first federated learning task.

For beneficial effect of the third aspect and some implementations, correspondingly refer to the related descriptions of the first aspect. Details are not described herein again.

According to a fourth aspect, a communication apparatus is provided. The communication apparatus may be used in a first network element, and may include modules or units that are in a one-to-one correspondence with the methods/operations/steps/actions described in the first aspect. The module or unit may be implemented by using a hardware circuit, software, or a combination of a hardware circuit and software.

In some implementations, the apparatus includes: a processing unit, configured to determine a first entity and a first role, where the first role indicates a role of the first entity in performing a first federated learning task; and a transceiver unit, configured to send a first request message to the first entity, where the first request message is used to request the first entity to perform the first federated learning task in the first role.

The transceiver unit may perform receiving and sending processing in the first aspect and the possible implementations of the first aspect, and the processing unit may perform processing other than the receiving and sending processing in the first aspect and the possible implementations of the first aspect.

According to a fifth aspect, a communication apparatus is provided. The communication apparatus may be used in a second network element, and may include modules or units that are in a one-to-one correspondence with the methods/operations/steps/actions described in the second aspect. The module or unit may be implemented by using a hardware circuit, software, or a combination of a hardware circuit and software.

In some implementations, the apparatus includes: a transceiver unit, configured to receive a third request message, where the third request message is used to obtain an entity that supports performing a first federated learning task, and the second network element supports discovery of an entity for performing the first federated learning task; and a processing unit, configured to determine at least one candidate entity and role information of the at least one candidate entity, where the role information of the at least one candidate entity indicates a role supported by the at least one candidate entity in the first federated learning task; and the transceiver unit is further configured to send a third response message, where the third response message includes the at least one candidate entity and the role information of the at least one candidate entity.

The transceiver unit may perform receiving and sending processing in the second aspect and the possible implementations of the second aspect. Optionally, the apparatus further includes a processing unit, and the processing unit may perform processing other than the receiving and sending processing in the second aspect and the possible implementations of the second aspect.

According to a sixth aspect, a communication apparatus is provided. The communication apparatus may be used in a third network element, and may include modules or units that are in a one-to-one correspondence with the methods/operations/steps/actions described in the third aspect. The module or unit may be implemented by using a hardware circuit, software, or a combination of a hardware circuit and software.

In some implementations, the apparatus includes: a processing unit, configured to obtain a first entity and a first role, where the first role indicates a role of the first entity in performing a first federated learning task, and the third network element supports coordinating the first entity in performing the first federated learning task; and a transceiver unit, configured to send a seventh request message to the first entity, where the seventh request message is used to request to perform the first federated learning task, and the seventh request message includes the first role.

The transceiver unit may perform receiving and sending processing in the third aspect and the possible implementations of the third aspect. Optionally, the apparatus further includes a processing unit, and the processing unit may perform processing other than the receiving and sending processing in the third aspect and the possible implementations of the third aspect.

According to a seventh aspect, a communication apparatus is provided, including at least one processor. The at least one processor is configured to execute a computer program or instructions, and/or use a logic circuit, to cause the communication apparatus to perform the method according to any one of the first aspect to the third aspect or any one of the possible implementations of these aspects.

In some implementations, the at least one processor is coupled to at least one memory, and the at least one memory stores the computer program or the instructions. Optionally, the communication apparatus further includes the at least one memory. Optionally, the at least one processor and the at least one memory are integrated together.

According to an eighth aspect, a chip is provided, including a processor and a communication interface. The communication interface is configured to: receive to-be-processed information and/or data, and send the to-be-processed information and/or data to the processor. The processor is configured to process the to-be-processed information and/or data, so that a communication apparatus on which a chip is mounted performs the method according to any one of the first aspect to the third aspect or any one of the possible implementations of these aspects.

According to a ninth aspect, a computer-readable storage medium is provided. The computer-readable storage medium stores computer instructions. When the computer instructions are executed by a computer, the method according to any one of the first aspect to the third aspect or any one of the possible implementations of these aspects is implemented.

According to a tenth aspect, a computer program product is provided. The computer program product includes computer program code. When the computer program code is executed by a computer, the method according to any one of the first aspect to the third aspect or any one of the possible implementations of these aspects is implemented.

According to an eleventh aspect, a communication system is provided, including the communication apparatus according to any one or more of the fourth aspect to the sixth aspect.

For technical effects of the technical solutions in the fourth aspect to the eleventh aspect, refer to the descriptions of the corresponding technical effects of the first aspect to the third aspect. Details are not described.

### BRIEF DESCRIPTION OF DRAWINGS

FIG. 1 is a diagram of a network architecture applicable to an embodiment of this application;
FIG. 2 is a schematic flowchart of a method for obtaining an entity for performing federated learning;
FIG. 3 is a schematic flowchart of a method for performing federated learning;
FIG. 4 is a schematic flowchart of a communication method according to an embodiment of this application;
FIG. 5 is a schematic flowchart of another communication method according to an embodiment of this application;
FIG. 6(a) and FIG. 6(b) are a schematic flowchart of still another communication method according to an embodiment of this application;
FIG. 7 is a schematic flowchart of yet another communication method according to an embodiment of this application;
FIG. 8(a) and FIG. 8(b) are a schematic flowchart of still yet another communication method according to an embodiment of this application;
FIG. 9 is a diagram of a communication apparatus according to an embodiment of this application; and
FIG. 10 is a diagram of another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), and internet-of-things (internet-of-things, IoT) communication systems, or other communication systems.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for users. The PLMN described in embodiments of this application may be specifically a network compliant with a requirement of a 3rd generation partnership project (3rd generation partnership project, 3GPP) standard, which is referred to as a 3GPP network for short. The 3GPP network usually includes but is not limited to a 5th generation (5th generation, 5G) mobile communication network, a 4th generation (4th generation, 4G) mobile communication network, and another future communication system, for example, a 6th generation (6th generation, 6G) mobile communication network.

For ease of description, the PLMN or the 5G network is used as an example for description in embodiments of this application.

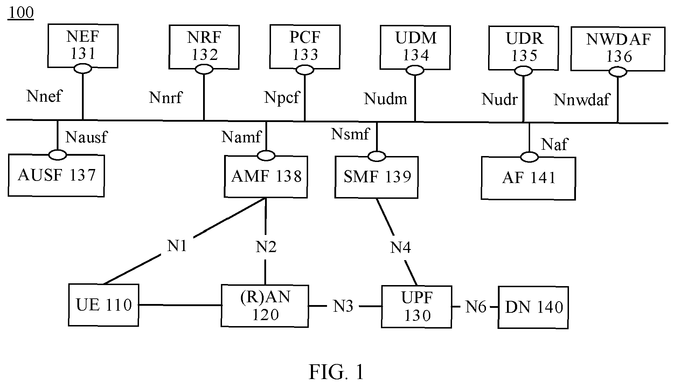

FIG. 1 is a diagram of a network architecture 100. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes functions of network elements of each part.

The terminal device part may include a terminal device 110. The terminal device 110 is a device that provides voice and/or data connectivity for a user. The terminal device 110 may also be referred to as user equipment UE. The terminal device 110 in this application is a device having a wireless transceiver function, and may communicate with one or more core network (core network, CN) devices via an access network device (which may also be referred to as an access device) in the (radio) access network (R)AN 120. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on the land, including an indoor device, an outdoor device, a handheld device, or a vehicle-mounted device; or may be deployed on the water (for example, on a ship); or may be deployed in the air (for example, on an airplane, a balloon, or a satellite). The terminal device 110 may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in an internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in transportation security, a wireless terminal in a smart city, a wireless terminal in a smart home, or the like. The terminal device herein is a 3GPP terminal. A type or a category of the terminal device is not limited in embodiments of this application. For ease of description, in this application, an example in which the UE represents the terminal device is used for description below.

The (R)AN 120 may include one or more access network elements or access network devices. An interface between the access network device and the terminal device may be a Uu interface (or referred to as an air interface, that is, a message exchanged between the access network device and the terminal device may be referred to as an air interface message). Certainly, in future communication, the name of the interface may remain unchanged, or may be replaced with another name. This is not limited in this application. The (R)AN 120 is a device that provides a wireless communication function for the terminal device 110, is a node or device that may enable the terminal device to access a wireless network, and may also be referred to as a network device. The RAN may be a 3GPP-related cellular system, for example, the 5G mobile communication system, or a future-oriented evolved system (for example, the 6G mobile communication system). The RAN may alternatively be an open radio access network (open RAN, O-RAN, or ORAN), a cloud radio access network (cloud radio access network, CRAN), or a wireless fidelity (wireless fidelity, Wi-Fi) system. The (R)AN 120 may be considered as a sub-network of the operator network, and is an implementation system between a service node in the operator network and the terminal device 110. For example, the terminal device 110 may be connected to the service node in the operator network via the (R)AN 120, to obtain a service provided by the service node. The (R)AN 120 includes but is not limited to a next generation base station node (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a small base station device, a mobile switching center, a network device in a future network, or the like. The access network device may alternatively be a module or unit that completes a function of a base station, for example, includes a central unit (central unit, CU) and a distributed unit (distributed unit, DU). In a possible network structure, the CU may be configured to support communication in protocols such as radio resource control (radio resource control, RRC), a packet data convergence protocol (packet data convergence protocol, PDCP), and a service data adaptation protocol (service data adaptation protocol, SDAP). The DU may be configured to support communication in a radio link control (radio link control, RLC) layer protocol, a medium access control (medium access control, MAC) layer protocol, and a physical layer protocol. A specific technology and a specific device form that are used by the access network device are not limited in embodiments of this application. In systems using different radio access technologies, devices with functions of the access network device may have different names. For ease of description, in all embodiments of this application, the foregoing apparatuses that provide the wireless communication function for the terminal device 110 are collectively referred to as access network devices, referred to as RANs for short. It should be understood that a specific type of the access network device is not limited in this specification.

In different systems, the CU (including a CU-CP or a CU-UP), the DU, or an RU may have different names, but a person skilled in the art may understand meanings thereof. For example, in an O-RAN system, a CU may also be referred to as an O-CU (open CU), a DU may also be referred to as an O-DU, a CU-CP may also be referred to as an O-CU-CP, a CU-UP may also be referred to as an O-CU-UP, and an RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The CN part may include but is not limited to the following network functions (network functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an application function (application function, AF) 141, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network.

The following further briefly describes functions of the NFs included in the CN.
1. The UPF 130 is a gateway provided by an operator, and is a gateway for communication between the operator network and the DN 140. Network functions of the UPF 130 include user plane-related functions such as packet routing and forwarding, packet inspection, traffic usage reporting, quality of service (quality of service, QoS) handling, lawful interception, uplink traffic verification, and downlink packet buffering. For example, the UPF 130 is responsible for forwarding and receiving user data in the terminal device 110. The UPF 130 may receive user data from the DN 140, and transmit the user data to the terminal device 110 via the access network device 120. The UPF 130 may alternatively receive user data from the terminal device 110 via the access network device 120, and forward the user data to the DN 140. Transmission resources and scheduling functions that are used by the UPF 130 to provide services for the terminal device 110 are managed and controlled by the SMF 139.
2. The NEF 131 is a control plane function provided by the operator, mainly enables a third party to use a service provided by the network, and supports exposure of capabilities, events, and data analytics by the network, secure provision of information from an external application to the PLMN, translation of internal-external information of the PLMN, and the like.
3. The NRF 132 is a control plane function provided by the operator, and may be configured to maintain real-time information of a network function and a service in the network.
4. The PCF 133 is a control plane function provided by the operator, mainly supports provision of a unified policy framework to govern network behavior and provision of policy rules to control plane network functions, and accesses subscription information relevant for policy decisions. For example, the PCF 133 may be classified into two PCFs having different functions, which are respectively a UE-PCF and an AMF-PCF.
5. The UDM 134 is a control plane function provided by the operator, and is responsible for storage of information such as a subscriber permanent identifier (subscription permanent identifier, SUPI) of a subscriber in the operator network, a generic public subscription identifier (generic public subscription identifier, GPSI) of the subscriber, and a credential (credential).
6. The UDR 135 is a control plane function provided by the operator, and provides functions such as storage and retrieval of subscription data for the UDM, storage and retrieval of policy data for the PCF, and storage and retrieval of NF group ID (group ID) information of the subscriber.
7. The NWDAF 136 is a control plane function provided by the operator, and has functions such as data collection, model training, data analytics, and model inference. An NWDAF network element containing analytics logic function (analytics logical function, AnLF) may be configured to infer and export analytics information and expose an analytics service. Analytics may refer to generating or providing statistics information and/or prediction based on a request of an analytics consumer (consumer). An NWDAF network element containing model training logical function (model training logical function, MTLF) may be configured to: train a machine learning (machine learning, ML) model or an artificial intelligence (artificial intelligence, AI) model, and expose a new training service, for example, provide a trained AI model or ML model for the AnLF. In this application, for a process of obtaining model-related data, the AnLF may serve as a data producer (producer) network element, and is denoted as an NFp; and the MTLF may serve as a data consumer network element, and is denoted as an NFc. Currently, the AnLF may request a model from the MTLF through a model subscription (MLModelProvision_Subscribe) service or message. The model may be obtained by the MTLF through training based on the model-related data (for example, referred to as samples). In addition, the AnLF may use a data set tag (data set tag) to specify a data set (data set), and the data set may include data related to one model. Therefore, the data set tag may be for marking the data set, that is, marking the model-related data. The data set tag may also be understood as an index of the data set or an index of the data. The MTLF may serve as a consumer network element of the model-related data, to obtain data stored by the data producer network element in a data repository. The data producer network element may be an AnLF, and the data repository network element may be a network element, for example, an analytics data repository function (analytics data repository function, ADRF), configured to store the data. In this application, the related data may be understood as data used for a vertical federated learning task, for example, input data, training data, inference data, or sample data.
8. The AF 141 is a control plane function provided by the operator, and mainly interacts with other NFs in the PLMN to provide corresponding services such as provision of visited network selection information for roaming UE, traffic routing guidance, and access to the NEF 131.
9. The AUSF 137 is a control plane function provided by the operator, and is usually used for primary authentication, that is, authentication between the terminal device 110 (a subscriber) and the operator network.
10. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
11. The SMF 139 is a control plane network function provided by the operator network, is responsible for managing a protocol data unit (protocol data unit, PDU) session (including session establishment, modification, and release) of the terminal device 110, and is for selection and reselection of a user plane function network element, internet protocol (internet protocol, IP) address allocation of the terminal device, quality of service (quality of service, QoS) control, and the like. The PDU session is a channel for transmission of a PDU, and the terminal device and the DN 140 transmit the PDU to each other through the PDU session. The SMF network function 139 is responsible for establishment, maintenance, deletion, and the like of the PDU session. The SMF network function 139 includes session-related functions such as session management (for example, session establishment, modification, and release, including maintenance of a tunnel between the user plane function UPF 130 and the (R)AN 120), selection and control of the UPF network function 130, service and session continuity (service and session continuity, SSC) mode selection, and roaming.

It may be understood that the foregoing network element or function may be a physical entity in a hardware device, or may be a software instance running on dedicated hardware, or may be a virtualized function instantiated on a sharing platform (for example, a cloud platform). In short, an NF may be implemented by using hardware or software.

In FIG. 1, Nnef, Nnrf, Npcf, Nudm, Nudr, Nnwdaf, Naf, Nausf, Namf, Nsmf, N1, N2, N3, N4, and N6 are interface serial numbers. For example, for meanings of the interface serial numbers, refer to meanings defined in the 3GPP standard protocol. The meanings of the interface serial numbers are not limited in this application. It should be noted that the names of the interfaces between the network functions in FIG. 1 are merely examples. During specific implementation, the interfaces in the system architecture may alternatively have other names. This is not limited in this application. In addition, names of messages (or signaling) transmitted between the foregoing network elements are merely examples, and do not constitute any limitation on functions of the messages.

It should be noted that in the architecture shown in FIG. 1, an interface between the (R)AN and the CN may also be referred to as an NG interface (not shown in the figure), and the (R)AN and the CN are connected through the NG interface. The NG interface may include an NG-C interface and an NG-U interface. The NG-C interface is a control plane interface connecting the (R)AN and the AMF, and is configured to transmit control plane data. The NG-U interface is a user plane interface connecting the (R)AN and the UPF, and is configured to transmit user plane data.

It should be understood that the network architecture 100 is merely a network architecture described from a perspective of the service-based architecture. In the service-based architecture, the PLMN may orderly combine a part or all of network functions based on a specific scenario requirement, to implement customization of a capability and a service of the network, to deploy dedicated networks for different services, that is, implement 5G network slicing (network slicing). With a network slicing technology, the operator can respond to customer requirements more flexibly and quickly and support flexible allocation of network resources.

For ease of description, in embodiments of this application, network functions (for example, the NEF 131, ..., and the SMF 139) are collectively/briefly referred to as NFs. That is, the NF described below in embodiments of this application may be replaced with any network function. In addition, in embodiments of this application, the session management function SMF 139 is referred to as an SMF for short, and the terminal device 110 is referred to as UE. That is, in embodiments of this application, the SMF described below may be replaced with a session management function, and the UE described below may be replaced with a terminal device. Some network functions are merely described as examples in FIG. 1, and the NF described below is not limited to the network functions shown in FIG. 1.

It should be understood that the AMF, the SMF, the UPF, the NEF, the AUSF, the NRF, the PCF, and the UDM shown in FIG. 1 may be understood as network elements in the core network that are configured to implement different functions, and for example, may be combined as required to form a network slice. These core network elements may be independent devices, or may be integrated into a same device to implement different functions. A specific form of the foregoing network elements is not limited in this application.

It should be further understood that the foregoing names are defined merely for ease of distinguishing between different functions, and should not constitute any limitation on this application. This application does not exclude a possibility that another name is used in the 5G network and another future network. For example, in the 6G network, a part or all of the foregoing network elements may still use the terminologies in 5G, or may use other names.

For ease of understanding, the following first describes related terms, concepts, or technologies that may be used in embodiments of this application.

### 1. Federated learning

The federated learning (Federated Learning, FL) is a distributed machine learning method in which multiple participants achieve collaborative training by exchanging model parameters through security mechanisms without exchanging or sharing original training data. In other words, the federated learning is an encrypted distributed machine learning technology. Data and computing capabilities of the participants can be fully used in the federated learning, so that the multiple participants can collaborate to build a common and robust machine learning model without sharing data. Therefore, the federated learning can effectively assist multiple organizations in data utilization and learning modeling while meeting requirements of user privacy protection, data security, and government regulations. In other words, the federated learning is intended to share knowledge and parameters without exchanging any data.

The federated learning includes horizontal federated learning and vertical federated learning. In an increasingly strict data supervision environment, the federated learning can resolve key problems such as data ownership, data privacy, data access rights, and access to heterogeneous data. In a data matrix, one horizontal row represents one training sample, and one vertical column represents one data feature. The horizontal federated learning is federated learning performed by combining multiple rows of samples that are of the multiple participants and have a same feature, that is, training data of the participants is horizontally divided. The horizontal federated learning is also referred to as feature-aligned federated learning (feature-aligned federated learning), that is, data features of participants are aligned, and the horizontal federated learning can increase a total quantity of training samples. As a machine learning technology, the VFL may be used to implement model training and inference when the participants are unwilling to share raw data, and is applicable to a case in which identifications (identifications, IDs) of training samples of the participants overlap a lot, but data features of the participants overlap a little. In the VFL, different data features of a common sample of the multiple participants are combined to perform federated learning, that is, training data of the participants is vertically divided. Therefore, the VFL is referred to as vertical federated learning. The vertical federated learning is federated learning that jointly utilizes different data features of the common samples across the multiple participants, that is, the training data of each participant is vertically partitioned. The vertical federated learning is also referred to as sample-aligned federated learning (sample-aligned federated learning), that is, training samples of the participants are aligned, and the vertical federated learning can increase dimensions of training data features.

The federated learning has been already used in industry. For example, Google applied it to its own GBoard project. For another example, WeBank proposed the FATE federated learning framework, both of which are typical examples of practical applications of the federated learning method in the foregoing parameter server architecture. They all require very high consistency among different devices participating in the learning, consistent model structures, and data alignment.

### 2. Analytics identifier (analytics ID)

The analytics identifier may indicate an analytics service or referred to as an analytics service, and is referred to as a service for short. The service is related to a model, that is, the model can be used to perform the service. Alternatively, it may be described as that the analytics identifier is related to a model, that is, the model is used to perform a service corresponding to the analytics identifier.

Alternatively, it may be understood as that an MTLF is related to the analytics identifier, that is, a model provided by the MTLF is used to support performing a service corresponding to the analytics identifier. For example, the MTLF may be related to one or more analytics identifiers. It may be understood as that the MTLF may provide a model of a service corresponding to each of the one or more analytics identifiers. For example, an MTLF 1 is related to an analytics identifier 1 and an analytics identifier 2, that is, the MTLF 1 corresponds to the analytics identifier 1 and the analytics identifier 2. In this case, the MTLF 1 may provide a model of a service corresponding to the analytics identifier 1 and a model of a service corresponding to the analytics identifier 2.

### 3. Interoperability indicator (interoperability indicator)

For example, the interoperability indicator may correspond to an MTLF, or correspond to an analytics identifier, or correspond to an analytics identifier corresponding to an MTLF. Alternatively, it may be described as that the interoperability indicator is related to the MTLF, or the interoperability indicator is related to the analytics identifier. The interoperability indicator may also be referred to as an interoperability indication, a machine learning (machine learning, ML) model interoperability indicator, or a model interoperability indicator (ML Model interoperability indicator).

The interoperability indicator includes a vendor list, or is described as an NWDAF provider (or supplier) list. A vendor in the vendor list is allowed to retrieve or use a model provided by the MTLF. The interoperability indicator also indicates that the MTLF supports a vendor in requesting, for an NWDAF of the vendor in the vendor list, the model provided by the MTLF. The interoperability indicator also indicates that the vendor in the vendor list is allowed to obtain the model from the MTLF. The interoperability indicator also indicates that the MTLF allows the vendor in the vendor list to obtain the model from the MTLF.

The interoperability indicator is a list of MTLF providers. For example, the interoperability indicator indicates a vendor identifier, or the interoperability indicator is associated with the vendor identifier. The interoperability indicator may be associated with the analytics identifier. For example, interoperability indicators are in one-to-one correspondence with analytics identifiers, indicating that an MTLF allows a corresponding vendor or an MTLF included in the vendor to obtain a model corresponding to an analytics identifier, and/or indicating that the MTLF is allowed to interoperate with the AnLF on the model corresponding to the analytics identifier. Optionally, one MTLF may have one or more interoperability indicators. If the MTLF has multiple interoperability indicators, the multiple interoperability indicators respectively correspond to different analytics identifiers. For example, an MTLF NF ID 1 corresponds to an analytics identifier 1 and an analytics identifier 2, where an MTLF to which the MTLF NF ID 1 belongs has an interoperability indicator 1 and an interoperability indicator 2, the interoperability indicator 1 corresponds to the analytics identifier 1, and the interoperability indicator 2 corresponds to the analytics identifier 2. Optionally, if the MTLF to which the MTLF NF ID 1 belongs and an MTLF to which an MTLF NF ID 2 belongs support interoperability, the MTLF to which the MTLF NF ID 2 belongs may have the interoperability indicator 1 and the interoperability indicator 2, where the interoperability indicator 1 corresponds to the analytics identifier 1, and/or the interoperability indicator 2 corresponds to the analytics identifier 2, that is, MTLFs of a same vendor may have a same interoperability indicator for a same analytics identifier. In addition, if the MTLF to which the MTLF NF ID 1 belongs and the MTLF to which the MTLF NF ID 2 belongs belong to different vendors, the MTLF to which the MTLF NF ID 2 belongs may have an interoperability indicator 3 and an interoperability indicator 4, where the interoperability indicator 3 corresponds to the analytics identifier 1, and/or the interoperability indicator 4 corresponds to the analytics identifier 2, that is, MTLFs of a same vendor may have different interoperability indicators for a same analytics identifier.

For example, the analytics identifier 1 is related to a model 1, to be specific, the model 1 is used to perform a service corresponding to the analytics identifier 1, and the analytics identifier 1 is related to the interoperability indicator 1, that is, the model 1 is related to the interoperability indicator 1. It is assumed that the interoperability indicator 1 includes an identifier of a vendor 1 and an identifier of a vendor 2, that is, the model 1 can be provided to the vendor 1 and the vendor 2 for use. Alternatively, it may be understood as that if a vendor of an NWDAF is the vendor 1 or the vendor 2, the NWDAF may use the model 1.

For example, one MTLF may have one or more interoperability indicators. If the MTLF has multiple interoperability indicators, the multiple interoperability indicators may correspond to different analytics identifiers. For example, an MTLF 1 corresponds to the analytics identifier 1 and the analytics identifier 2, where the interoperability indicator 1 corresponds to the analytics identifier 1, and the interoperability indicator 2 corresponds to the analytics identifier 2.

### 4. Model producer

The model producer is a subject that produces a model, or a subject that has the right to provide model information to another entity based on a network configuration. A consumer may obtain a model based on the model information. The model information includes but is not limited to: a uniform resource locator (uniform resource locator, URL) of a model file, a model, and the like.

### 5. Vendor identifier

A vendor identifier (vendor ID) of a vendor (vendor) may also be represented as network element information, and identifies a vendor or a manufacturer of a network element. For example, a Vendor ID 1 identifies a vendor of an NWDAF network element.

The vendor identifier may identify a device vendor. One vendor identifier may correspond to one or more NWDAF device identifiers. For example, both an NWDAF NF ID 1 and an NWDAF NF ID 2 may correspond to a vendor identifier 1. To be specific, an MTLF to which an MTLF NF ID 1 belongs and an MTLF to which an MTLF NF ID 2 belongs belong to a same vendor, and a vendor identifier of the vendor is the vendor identifier 1.

The foregoing briefly describes terms in this application, which are not described in detail again in the following embodiments. In addition, the foregoing descriptions of the terms are merely descriptions for ease of understanding, and do not limit the protection scope of embodiments of this application.

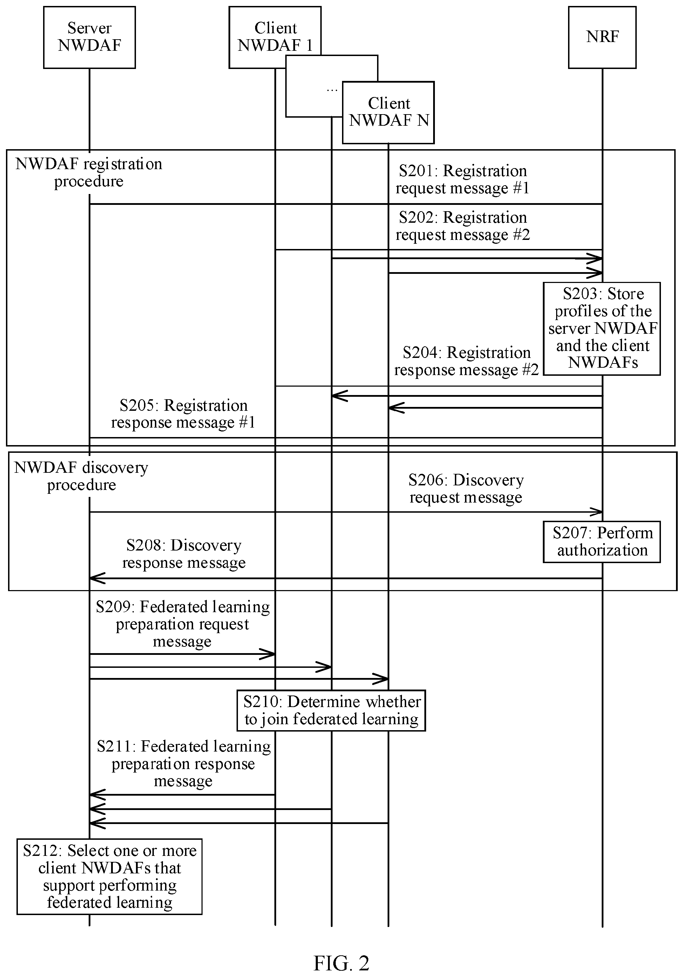

FIG. 2 is a schematic flowchart of a method for obtaining an entity for performing federated learning. As shown in FIG. 2, the following multiple steps are included. For a part that is not described in detail, refer to an existing protocol. Steps S201 to S205 are an NWDAF registration procedure, steps S206 to S208 are a client NWDAF discovery procedure, and steps S209 to S212 are a selection procedure in which a server NWDAF determines a client NWDAF performing federated learning.

S201: The server NWDAF sends a registration request message #1 to an NRF. Correspondingly, the NRF receives the registration request message #1 from the server NWDAF. The registration request message #1 is used to request to register with a network.

For example, the registration request message #1 may be an Nnrf_NFManagement_NFRegister_request message, and the registration request message #1 includes a profile (for example, a server NWDAF profile). The profile includes one or more of the following: an NWDAF NF type, an analytics ID, address information of the server NWDAF, a service area, FL capability type information (for example, an FL server), or a time interval within which the server NWDAF supports the FL.

S202: The client NWDAF sends a registration request message #2 to the NRF. Correspondingly, the NRF receives the registration request message #2 from the client NWDAF. The registration request message #2 is used to request to register with the network.

For example, the registration request message #2 may be an Nnrf_NFManagement_NFRegister_request message, and the registration request message #2 includes a profile (for example, a client NWDAF profile). The profile includes one or more of the following: an NWDAF NF type, an analytics ID, address information of the client NWDAF, a service area, FL capability type information (for example, an FL client), or a time interval within which the client NWDAF supports the FL.

It should be understood that the server NWDAF and the client NWDAF each are an NWDAF containing MTLF, and may participate in federated learning training.

Optionally, a quantity of client NWDAFs is not limited in this application. For example, one or more NWDAFs exist, for example, an NWDAF 1, ..., and an NWDAF N, where N is an integer greater than or equal to 1.

S203: The NRF stores the profiles of the server NWDAF and the client NWDAF.

For example, the NRF stores the server NWDAF profile and the client NWDAF profile.

S204: The NRF sends a registration response message #2 to the client NWDAF. Correspondingly, the client NWDAF receives the registration response message #2 from the NRF.

S205: The NRF sends a registration response message #1 to the server NWDAF. Correspondingly, the server NWDAF receives the registration response message #1 from the NRF.

S206: The server NWDAF sends a discovery request message to the NRF. Correspondingly, the NRF receives the discovery request message from the server NWDAF.

For example, the server NWDAF sends the discovery request message to the NRF to discover an available service in the network. For example, the server NWDAF invokes Nnrf_NFDiscovery_Request from an NRF that is properly configured in a same PLMN, and includes an NF type of an expected NF instance in the Nnrf_NFDiscovery_Request. Optionally, one or more of the following may be further carried: an expected service name, an NF type of the server NWDAF, and an expected target NF location.

S207: The NRF performs authorization.

For example, the NRF authorizes the Nnrf_NFDiscovery_Request in step S206. For example, the NRF decides, based on a profile of an expected NF/NF service and a type of the server NWDAF, whether to allow the server NWDAF to discover the expected NF instance. If the expected NF instance or NF service instance is deployed in a network slice, the NRF authorizes a discovery request based on a discovery configuration for the network slice. For example, the expected NF instance can be discovered only by an NF in the same network slice.

S208: The NRF sends a discovery response message to the server NWDAF. Correspondingly, the server NWDAF receives the discovery response message from the NRF.

The discovery response message may carry one or more client NWDAFs, for example, a client NWDAF 1, ..., and a client NWDAF N.

For example, if the NRF performs authorization, the NRF determines a matched NF instance set based on the Nnrf_NFDiscovery_Request and an NRF internal policy, and delivers an NF profile of an NF instance, for example, the client NWDAF. For example, the discovery response message may be an Nnrf_NFDiscovery_Response message. In this case, an NF profile of each NF instance may be sent to the server NWDAF through the Nnrf_NFDiscovery_Response message.

Optionally, if the server NWDAF includes the expected target NF location in step S206, the NRF should not limit a set of discovered NF instances or NF service instances to the target NF location. For example, if an NF instance or an NF service instance cannot be found for a preferred target NF location, the NRF may provide an NF instance or an NF service instance whose location is not the preferred target NF location.

S209: The server NWDAF sends a federated learning preparation request message to the one or more client NWDAFs. Correspondingly, the one or more client NWDAFs receive the federated learning preparation request message from the server NWDAF.

For example, the federated learning preparation request message may be a Federated Learning preparation request message. For example, the server NWDAF sends a federated learning preparation request to an FL client NWDAF by using an Nnwdaf_MLModelTraining_Subscribe or Nnwdaf_MLModelTrainingInfo_Request service with an ML preparation flag, to check whether the client NWDAF can meet an ML model training requirement (for example, an analytics ID or ML model interoperability information), a data availability requirement (a list of event IDs of local data for training, and the data availability requirement may further include data set statistical properties, a time window of data samples, and a minimum quantity of data samples), an availability time requirement (a time span needed for an FL procedure), or the like.

S210: The one or more client NWDAFs determine whether to join federated learning.

For example, the one or more client NWDAFs check whether the one or more client NWDAFs can meet the ML model training requirement, and/or if the model information is provided in the federated learning preparation request message in step S209, the one or more client NWDAFs further needs to check whether the one or more client NWDAFs can successfully download the model, and decide, based on implementation, whether to join the federated learning procedure. Example criteria used by the one or more client NWDAFs may be based on availability, computation and communication capabilities, and ML model interoperability information of the one or more client NWDAFs.

S211: The one or more client NWDAFs send federated learning preparation response messages to the server NWDAF. Correspondingly, the server NWDAF receives the federated learning preparation response messages from the one or more client NWDAFs.

For example, the federated learning preparation response message may be a Federated Learning preparation response message. For example, the one or more client NWDAFs invoke an Nnwdaf_MLModelTraining_Subscribe response service operation or an Nnwdaf_MLModelTrainingInfo_Request response service operation, to indicate whether the one or more client NWDAFs will join the federated learning process. If the one or more client NWDAFs cannot join the federated learning process, the client NWDAF may include a cause value in the federated learning preparation response message. For example, the one or more client NWDAFs currently cannot support federated learning, or are currently overloaded.

S212: The server NWDAF selects one or more client NWDAFs that support performing federated learning.

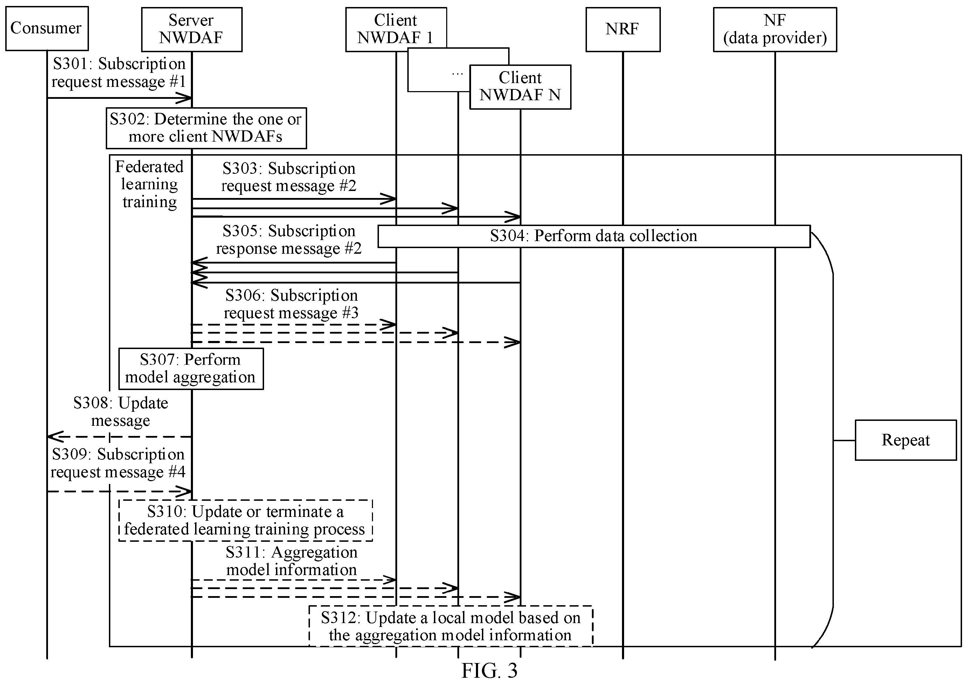

For example, the server NWDAF selects or finally determines, based on the federated learning preparation response messages that are sent by the one or more client NWDAFs and received in step S211, the one or more client NWDAFs that support performing federated learning. For a specific procedure of performing federated learning by the one or more client NWDAFs, refer to the following solution shown in FIG. 3.

FIG. 3 is a schematic flowchart of a method for performing federated learning. As shown in FIG. 3, the following multiple steps are included. For a part that is not described in detail, refer to the existing protocol.

S301: A consumer sends a subscription request message #1 to a server NWDAF. Correspondingly, the server NWDAF receives the subscription request message #1 from the consumer. The subscription request message #1 is used to subscribe to ML model provisioning or training.

For example, the consumer (for example, an NWDAF containing AnLF, or an NWDAF containing MTLF) sends the subscription request message #1, for example, a subscription request for ML model provisioning/training, to the server NWDAF by using an Nnwdaf_MLModelProvision service, to retrieve an ML model.

The subscription request message #1 includes one or more of the following: an analytics ID, an ML model metric (for example, ML model accuracy), an accuracy report interval, or a pre-determined status (an ML model accuracy threshold or time when an ML model is needed). It should be understood that the ML model accuracy threshold may indicate target ML model precision of a training process. When the ML model accuracy threshold is achieved during the training process, the server NWDAF may stop the training process. If the consumer provides the time when the ML model is needed, the server NWDAF may take this information into account, to decide maximum response time for its client NWDAF.

S302: The server NWDAF determines one or more client NWDAFs.

For a specific implementation, refer to the related descriptions in the method 200. For brevity, details are not described herein again. For example, the one or more client NWDAFs determined by the server NWDAF include: a client NWDAF 1, ..., and a client NWDAF N.

S303: The server NWDAF sends a subscription request message #2 to the one or more client NWDAFs. Correspondingly, the one or more client NWDAFs receive the subscription request message #2 from the server NWDAF.

For example, the subscription request message #2 may be Nnwdaf_MLModelTraining_Subscribe. For example, the server NWDAF sends Nnwdaf_MLModelTraining_Subscribe or Nnwdaf_MLModelTrainingInfo_Request to the one or more client NWDAFs, to perform local model training.

The subscription request message #2 may carry one or more of the following: initial federated learning parameters provisioning (Initial Federated Learning parameters provisioning), the ML model metric, an initial ML model, or the maximum response time. The maximum response time is maximum response time for the client NWDAF to report interim local ML model information to the server NWDAF.

S304: Optionally, the one or more client NWDAFs perform data collection.

For example, if the client NWDAF does not yet have local data available, each client NWDAF may collect its local data from an NF (a data provider) by using the existing mechanism specified in TS 23.288.

S305: The one or more client NWDAFs send subscription response messages #2 to the server NWDAF. Correspondingly, the server NWDAF receives the subscription response messages #2 from the one or more client NWDAFs.

For example, the subscription response message #2 may be Nnwdaf_MLModelTraining_Notify, and is used to report local model training information. For example, during the federated learning training process, each client NWDAF trains the ML model provided by the server NWDAF based on its data, and reports the interim local ML model information to the server NWDAF in Nnwdaf_MLModelTraing_Notify or Nnwdaf_MLModelTraingInfo_Response.

Optionally, the Nnwdaf_MLModelTraining_Notify or Nnwdaf_MLModelTrainingInfo_Response may further include a local ML model metric computed by the one or more client NWDAFs and training input data information (for example, an area covered by a data set, a sampling ratio, a maximum/minimum value of each dimension of data).

Optionally, ML models, which are sent from the one or more client NWDAFs to the server NWDAF in the federated learning training process, are information needed by the server NWDAF to build an aggregated model based on a locally trained ML model. If the client NWDAF is not capable of completing training of an interim local ML model within the maximum response time provided by the server NWDAF, the one or more client NWDAFs may send a delay event notification that includes a delay event indication, an optional cause code (for example, a local ML model training failure, or more time necessary for local ML model training), expected time to complete the training if available to the one or more client NWDAFs before the maximum response time elapses, and the like.

S306: Optionally, the server NWDAF sends a subscription request message #3 to the one or more client NWDAFs. Correspondingly, the one or more client NWDAFs receive the subscription request message #3 from the server NWDAF.

For example, the subscription response message #3 may be Nnwdaf_MLModelTraining_Notify, and carries extended response time (Extended response time) and/or a current iteration round ID (current iteration round ID). For example, if the server NWDAF receives a notification/response that the one or more client NWDAFs are not capable of completing the training within the maximum response time, the server NWDAF may send an extended maximum response time_MLModel TrainingInfo_Request to the client NWDAF in Nnwdaf_MLModelTraining_Subscribe or Nnwdaf, before which the client NWDAF needs to report the interim local ML model information to the server NWDAF. Otherwise, the server NWDAF may indicate the client NWDAF to skip reporting for this iteration. The client NWDAF includes the current iteration round ID in the request message, to indicate that the request is to modify training parameters of the current iteration round.

Optionally, the server NWDAF may inform the client NWDAF to cease the ML model training by sending a termination request and to report back current local ML Model updates.

S307: The client NWDAF performs model aggregation.

For example, the client NWDAF aggregates all the local ML model information retrieved in step S305, to update a global ML model. Optionally, the server NWDAF may also compute a global ML model metric, for example, based on the local ML model metric or by applying the global model on a validation data set (if available). The server NWDAF may update the global ML Model each time the client NWDAF provides updated local ML Model information, or the server NWDAF may decide to wait for local ML Model information from all client NWDAFs before updating the global ML model.

If the server NWDAF provides the maximum response time for the client NWDAF to provide the interim local ML model information in step S303, or provides the extended maximum response time in step S306, the server NWDAF decides either to wait for the client NWDAF which have not yet provided its interim local ML model within the (extended) maximum response time or to aggregate only retrieved local ML model information instances to update the global ML model. The server NWDAF makes this decision based on the notification/response from the client NWDAF; or if the notification is not received, the server NWDAF makes this decision based on local configuration.

S308: Optionally, the client NWDAF sends an update message to the consumer. Correspondingly, the consumer receives the update message from the client NWDAF. The update message indicates a current ML training status to the consumer.

For example, in response to step S301, the client NWDAF sends an Nnwdaf_MLModelProvision_Notify message to the consumer to update the global ML model metric to the consumer periodically (for example, in a specific quantity of training rounds or every 10 min) or dynamically when some pre-determined statuses are achieved (for example, the ML model accuracy threshold is achieved or training time expires).

S309: Optionally, the consumer sends a subscription request message #4 to the server NWDAF. Correspondingly, the server NWDAF receives the subscription request message #4 from the consumer. The subscription request message #4 is used to modify the subscription for update or termination.

For example, the consumer decides whether the current model can fulfill a requirement, for example, the global ML model metric is satisfactory for the consumer, and decides to stop or continue the training process. The consumer may re-invoke the Nnwdaf_MLModelProvision_Subscribe service operation as used in step S301 to stop or continue the training process.

S310: Optionally, the server NWDAF updates or terminates the federated learning training process.

For example, the server NWDAF updates or terminates the current federated learning training process based on the subscription request message #4 sent by the consumer in step S309. Optionally, if the server NWDAF receives a request in step S309 to stop the federated training process, the following steps S311 and S312 are skipped.

S311: Optionally, the server NWDAF sends aggregated model information to the one or more client NWDAFs. Correspondingly, the one or more client NWDAFs receive the aggregated model information from the server NWDAF.

In other words, if the federated learning training process continues, the server NWDAF determines the client NWDAF and sends Nnwdaf_MLModelTraingInfo_Request including the aggregated ML model information to the one or more selected client NWDAFs for a next round of federated training.

S312: Optionally, the one or more client NWDAFs update the local model based on the aggregated model information.

For example, each client NWDAF updates its local ML model based on the aggregated ML model information distributed by the server NWDAF in step S311.

It should be noted that the foregoing steps S304 to S312 are repeated until a training termination condition (for example, a maximum quantity of iterations, or a result of a loss function is less than a threshold) is reached.

When the federated training process is complete, the server NWDAF requests the one or more client NWDAFs to terminate the federated learning training process. In an implementation, the server NWDAF invokes an Nnwdaf_MLModelTraing_Unsubscribe service with a cause code that the federated learning process has finished and optionally with final aggregated ML model information. Then, the one or more client NWDAFs terminate the local model training and if the final aggregated ML model information is received from the server NWDAF, the one or more client NWDAFs can store the aggregated ML model information for further use.

Optionally, after the federated learning training process is complete, the client NWDAF may send, to the consumer, Nnwdaf_MLModelProvision_Notify that includes the globally optimal ML model information.

Currently, a 5GC supports only horizontal federated learning. There is no process mechanism to support vertical federated learning. In the vertical federated learning, there are multiple types of participants, such as UE, an NWDAF, or an AF. However, an existing network element discovery mechanism does not support discovery of multiple types of NF types in a same request message. In addition, in a vertical federated task, various participants may have different label information, and models obtained through training by using different label information may be different. Consequently, the federated learning task cannot be effectively performed. Therefore, how to effectively perform the vertical federated learning task is a problem that needs to be considered.

In view of this, this application provides a communication method and a communication apparatus. A first role is sent to a first entity, so that the first entity can perform a first federated learning task in the first role, to effectively improve efficiency of performing the first federated learning task.

The following describes, in detail with reference to the accompanying drawings, the communication method provided in embodiments of this application. Embodiments provided in this application are applicable to a communication scenario in which a transmit-end device communicates with a receive-end device, for example, may be applied to the communication system shown in FIG. 1.

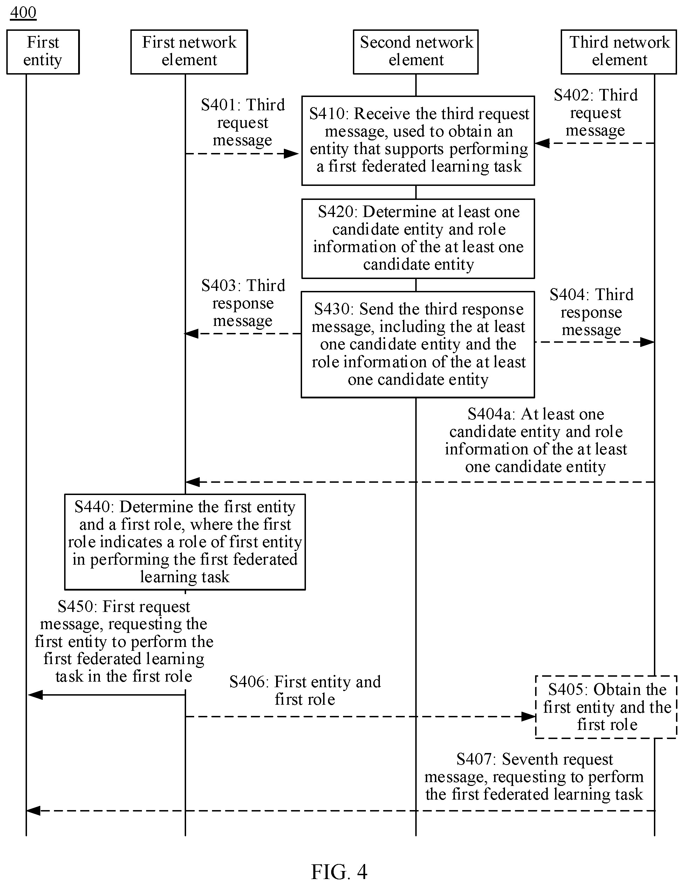

FIG. 4 is a schematic flowchart of a communication method 400 according to an embodiment of this application. As shown in FIG. 4, the method procedure may be performed by a first network element (for example, a task initiator), a second network element (for example, an entity discovery function network element), or a third network element (for example, a task coordinator), or may be performed by a chip or a circuit of the first network element, the second network element, or the third network element, or may be implemented by a logic module or software that can implement all or a part of functions of the communication apparatus. This is not limited in this application. The following provides descriptions by using an example in which the method is performed by the first network element, the second network element, or the third network element. The method includes the following multiple steps. For a part that is not described in detail, refer to the foregoing existing protocol.

S410: The second network element receives a third request message.

The third request message is used to request to obtain an entity that supports performing a first federated learning task.

In this application, federated learning may be referred to as federated machine learning, collaborative learning, or alliance learning.

Optionally, the first federated learning task may be replaced with another name such as first federated learning, a first federated learning function, a first federated learning process (process), or a first federated learning activity. This is not limited in this application. In addition, the obtaining the entity that supports performing the first federated learning task may be understood as: obtaining an entity (or a network element, a device, a node, or the like) that has a capability of performing the first federated learning task. In other words, the entity supports performing the first federated learning task (or activity, process, or the like).

For example, the first federated learning task may include one or more of the following: network performance analytics, artificial intelligence (Artificial Intelligence, AI) model training, face recognition, or cross-institutional medical data analytics and disease prediction, or the like. Optionally, the federated learning task in this embodiment of this application may be a vertical federated learning task. For a specific meaning, refer to the foregoing related descriptions.

In this application, the second network element supports discovery of an entity for performing the first federated learning task, or the second entity supports providing information about the entity for performing the first federated learning task. For example, the second network element may be an NRF, a NEF, or another network entity. Optionally, for discovery of an entity of NF (for example, NWDAF) type, the second network element may be an NRF or another network entity; and for discovery of an entity of AF type, the second network element may be a NEF or another network entity.

It should be understood that the entity that supports performing the first federated learning task may be understood as: The entity supports the first federated learning task, or the entity has a capability of performing the first federated learning task. For example, the entity may include one or more of the following: an NWDAF, an AF, a coordinator (namely, an example of the third network element), or a network element or an entity related to the first federated learning task. Optionally, the entity that supports performing the first federated learning task in this application may alternatively be replaced with a network element, a device, or the like that supports performing the first federated learning task.

Optionally, in an implementation, the second network element may receive the third request message from the first network element or the third network element. For details, refer to the following step S401 or S402.

S401: The first network element sends the third request message to the second network element. Correspondingly, the second network element receives the third request message from the first network element.

In this embodiment of this application, the first network element supports initiation of the first federated learning task, or the first network element has a capability of initiating the first federated learning task. For example, the first network element may be a coordinator, an NWDAF, or an AF. Assuming that the first network element is an AF 1, and the second network element is an NRF, the AF 1 may send the third request message to the NRF, to request to obtain an entity supporting network performance analytics.

S402: The third network element sends the third request message to the second network element. Correspondingly, the second network element receives the third request message from the third network element.

In this embodiment of this application, the third network element supports coordinating a first entity in performing the first federated learning task, or the third network element has a capability of supporting coordinating the first entity in performing the first federated learning task. Optionally, the third network element and the first network element or the second network element may belong to a same network. For example, the third network element may be an NF, an AF, or a coordinator, or the third network element and the first network element or the second network element may be deployed in a same network, for example, an external network. The third network element may be a third-party entity. This is not limited in this application. Assuming that the third network element is a task coordinator, and the second network element is an NRF, the task coordinator may send the third request message to the NRF, to request to obtain the entity supporting network performance analytics.

Optionally, the third request message includes one or more of the following:

### (1) Multiple types

Each of the multiple types corresponds to at least one candidate entity. The type herein may be understood as a type of an entity, for example, multiple network function NF types and/or multiple application function AF types. For example, the at least one candidate entity may include one or more of the following: an AF, an NF, or a third network element (for example, a task coordinator). The at least one candidate entity is a candidate entity that has a capability of performing the first federated learning task. In this embodiment of this application, the at least one candidate entity includes the first entity.

In other words, the first network element or the third network element includes multiple types in the third request message, so that efficiency of discovering the at least one candidate entity by the second network element can be improved. In other words, the second network element may provide the at least one candidate entity corresponding to the multiple types. In other words, types of candidate entities provided by the second network element are diversified, and are not limited to one NF type or one AF type.

### (2) First group identifier

The first group identifier indicates a first federated learning group, and an entity in the first federated learning group supports performing the first federated learning task, that is, the first federated learning group corresponds to the first federated learning task. For example, the first federated learning group includes at least one candidate entity. This indicates that the first federated learning group includes the first entity. Optionally, the entity in the first federated learning group and role information of the entity are preconfigured.

For example, the first group identifier is a VFL ID 1, and information about the entity in the first federated learning group includes one or more of the following: an AF identifier (AF ID), an AF instance (instance) (for example, an AF 1 or an AF 2), an AF type, an application service name (Application Name), a vendor device name (Vendor ID), an NF identifier (NF ID), an NF instance (for example, an NWDAF ID), or a network identifier (PLMN ID), where the AF 1 identifies an AF of a type or a specific AF.

In other words, the second network element may correspondingly determine the first federated learning group based on the VFL ID 1 carried in the third message, that is, determine information about a group member in the first federated learning group (including one or more of a group member identifier, a group member type, role information of the group member, capability information of the group member, or a federated learning task supported by the group member). The information about the group member in the first federated learning group may be predefined or preconfigured.

For example, the first federated learning group may also be referred to as a first federated learning alliance. Information about a federation member includes one or more of a federation member identifier, a federation member type, role information of the federation member, capability information of the federation member, or a federated learning task supported by the federation member.

In a possible case, the information about the entity in the first federated learning group is further included.

### (3) First analytics identifier

The first analytics identifier indicates the first federated learning task.

For example, the first analytics identifier may indicate a specific function or service, and the specific function or service is related to a model, that is, the model may be used to perform the specific function or service, or the model supports performing the specific function or service corresponding to the first analytics identifier. The specific function or service may be face recognition, network performance analytics, or the like. Using an analytics ID as an example, the first federated learning group may correspond to one or more analytics IDs. For example, the analytics ID may indicate an analytics service such as terminal exception detection or terminal session analytics (for example, quality of service QoS analytics).

### (4) First interoperability indicator (interoperability indicator)

The first interoperability indicator may correspond to the first analytics identifier, and indicates the first federated learning task.

(5) Task identifier corresponding to the first federated learning task, where the task identifier identifies the first federated learning task.

Optionally, the task identifier may be allocated by the first network element or the third network element, and sent to the first network element. This is not limited in this application.

### (6) Information about a vertical federation

For example, the information about the vertical federation may identify or distinguish the vertical federation (for example, the first federated learning group). For example, the information about the vertical federation may include one or more of an identifier (for example, the first group identifier) of the vertical federation, an identifier (for example, the first analytics identifier) of at least one analytics service corresponding to the vertical federation, an identifier of at least one AF corresponding to the vertical federation, information about at least one network corresponding to the vertical federation, or information about at least one device vendor corresponding to the vertical federation. The identifier of the vertical federation may indicate or identify one vertical federation, and may be referred to as a federation ID (namely, a first group ID, for example, the VFL ID 1).

It may be understood that the vertical federation (for example, the first federated learning group) may be a professional organization including two or more members (or referred to as participants) with a goal of participating in a common activity of the vertical federation or sharing resources with each other to achieve a common result. Any member may be a natural person, a company, an organization, a network element entity (for example, an application function or a service), a network (for example, a PLMN or a CN), or the like, or may be a combination of any of the foregoing members. All or some members in the federation jointly participate in the vertical federated task (for example, the first federated learning task). The vertical federated task is a task corresponding to vertical federated learning, and the vertical federated task may include training and/or inference. The vertical federated task may also be referred to as a vertical federated activity or a vertical federated learning task, or referred to as a learning task or a federated task for short. In embodiments of this application, multiple AFs included in the vertical federation may separately maintain respective data. For example, the AFs separately maintain terminal data of different terminals. An object of the vertical federated learning may be a terminal.

For the vertical federated task (for example, the first federated learning task), the terminal data separately included in the multiple AFs in the vertical federation may be used as samples of the learning task. The vertical federated learning usually requires vertical federated learning members to use data of a same object for training. Determining the samples of the vertical federated task may be understood as determining, by the vertical federated learning members, specific objects whose data is jointly used to perform the vertical federated task. For example, when the vertical federated task is PDU session (session) analytics of the terminal, and the vertical federated learning members include the CN, the AF 1, and the AF 2. In this case, the CN, the AF 1, and the AF 2 all need to use data of a same terminal to perform the vertical federated task. The AF 1 and the AF 2 may be connected to the CN. For example, if the vertical federated learning members include an NF network element (for example, an NWDAF) in a PLMN network, the AF 1, and the AF 2, the NWDAF, the AF 1, and the AF 2 all need to use data of a same terminal to perform the vertical federated task. The AF 1 and the AF 2 may be AFs in the PLMN network. For another example, the AF may alternatively be an AF outside the network, or may be a trusted AF (trusted AF) in the PLMN, or may be an untrusted AF (untrusted AF). That is, a relationship between the AF and the network is not limited. It may be understood that a relationship between the members in the vertical federation is not limited either. In this application, the AF serve as an application provider, for example, may be an application server (application server, AS) or an application-related network element entity.

S420: The second network element determines at least one candidate entity and role information of the at least one candidate entity.

The role information of the at least one candidate entity indicates a role supported by the at least one candidate entity in the first federated learning task. The at least one candidate entity is a candidate entity that has a capability of performing the first federated learning task. In this embodiment of this application, the at least one candidate entity includes the first entity.

For example, the role supported by the candidate entity in the first federated learning task includes any one or more of the following:
(1) supporting providing a label in the first federated learning task, where the label corresponds to the first federated learning task (which may be referred to as a primary participant), and the label is used for the first federated learning task, for example, used for model training and/or model evaluation corresponding to the first federated learning task;
(2) supporting providing a label and data in the first federated learning task (which may be referred to as a primary participant), where the data is used for the first federated learning task, for example, used for model training and/or inference corresponding to the first federated task, and optionally, a data granularity supported by the vertical federation may be a terminal granularity, a federation identifier granularity, an analytics identifier granularity, a federation member granularity, or the like, that is, indicate a granularity of data used for the first federated learning task, for example, the terminal granularity indicates that a sample used for the first federated learning task is data of a terminal within a specific range, and for example, for the terminal granularity, the data granularity supported by the vertical federation may indicate that the sample used for the first federated learning task is traffic data of the terminal on the AF, service data of the terminal on the AF, or the like;
(3) supporting providing data in the first federated learning task (which may be referred to as a secondary participant); and
(4) supporting coordinating a participant in completing the first federated learning task (which may be referred to as a coordinator).

In this embodiment of this application, the role information may be understood as role information or capability information. The supported role may be understood as a supported role. The role may be understood as a logical role in the first federated learning task, for example, a primary participant, a secondary participant, or a coordinator. The supported role may also be understood as having a capability, or having a capability corresponding to the role, including: having a capability of providing a federated training label in the first federated learning task, and/or having a capability of providing federated training data in the first federated learning task.

The following describes a specific implementation in which the second network element determines the at least one candidate entity and the role information of the at least one candidate entity.

In an implementation, the third request message may indicate the first federated learning task. For example, for the third request message, the second network element may determine the first federated learning task and/or the first federated learning group based on the received third request message, and use a part or all of entities in the first federated learning group as candidate entities, to determine the at least one candidate entity and the role information of the at least one candidate entity.

In another implementation, the second network element determines the corresponding first federated learning group based on at least one of the first analytics identifier, the first group identifier, the information about the vertical federation, or the first interoperability indicator carried in the third request message, and further determines the at least one candidate entity and the role information of the at least one candidate entity from the first federated learning group.

In still another implementation, the second network element selects an entity corresponding to the AF type and/or an entity corresponding to the NF type from the first federated learning group based on the multiple types carried in the third request message, and uses the entity of the AF type and/or the entity of the NF type as candidate entities, to determine the at least one candidate entity and the role information of the at least one candidate entity.

Optionally, the at least one candidate entity may be understood as at least one active entity in the first federated learning group. The active entity herein may be a member, in the current first federated learning group, that has or supports participating in the first federated learning task.

Optionally, before performing step S410, the second network element obtains the at least one candidate entity in the first federated learning group and the role information of the at least one candidate entity.

In an example, the at least one candidate entity in the first federated learning group and the role information of the at least one candidate entity may be predefined, or configured or preconfigured through signaling. The predefinition may include a definition provided in advance, for example, a definition in a protocol. The preconfiguration may be implemented by pre-storing corresponding code, table, character string, or another manner indicating the candidate entity in the first federated learning group and the role information of the candidate entity in the second network element. A specific implementation thereof is not limited in this application.

In another example, a second entity in the first federated learning group sends a registration request message to the second network element, to request to register with a network. The registration request message carries a profile (profile) of the second entity. Correspondingly, the second network element may store the profile of the second entity. The profile may include at least one of an identifier of a second candidate entity, a type of the second candidate entity, a federated learning task (for example, the first federated learning task) supported by the second candidate entity, an identifier of a first group to which the second candidate entity belongs, information about a vertical federation to which the second candidate entity belongs, a first analytics identifier supported by the second candidate entity, a first interoperability indicator, or a role supported by the second candidate entity in the first federated learning task. It should be understood that the at least one second entity supports performing the first federated learning task, the at least one second entity includes the at least one candidate entity, and the at least one candidate entity includes the first entity. Therefore, the second network element may learn of the at least one candidate entity in the first federated learning group and the role information of the candidate entity in performing the first federated learning task, for example, including whether the candidate entity supports provision of a label in the first federated learning task, or whether the candidate entity has a capability of coordinating with the first entity to perform the first federated learning task. For example, if the second entities include the AF 1, the AF 2, the NWDAF 1, the NWDAF 2, and the third network element, the AF 1, the AF 2, the NWDAF 1, the NWDAF 2, and the third network element separately send registration request messages to the second network element, and include respective profiles. The AF 1 and the AF 2 support provision of data in the first federated learning task, the NWDAF 1 and the NWDAF 2 support provision of a label and data in the first federated learning task, and the third network element supports coordinating the entity in performing the first federated learning task. Further, the second network element may select some entities from the second entities as candidate entities. For example, the at least one candidate entities include the AF 1, the AF 2, the NWDAF 1, and the third network element.

S430: The second network element sends a third response message.

The third response message includes the at least one candidate entity and the role information of the at least one candidate entity. For example, the at least one candidate entity may include multiple types of entities, for example, an AF, an NF, an NWDAF, or the third network element (for example, the task coordinator).

Optionally, in an implementation, in response to step S401 or S402, the second network element may send the third response message to the first network element or the third network element. For details, refer to the following step S403 or S404.

S403: The second network element sends a third response message to the first network element. Correspondingly, the first network element receives the third response message from the second network element.

For example, assuming that the first network element is the AF 1, and the second network element is the NRF, after receiving the third request message from the AF 1, the NRF may feed back an NF instance and an AF instance, for example, the AF 2 and an NF 3, to the AF 1 based on the NF type and the AF type that are carried in the third request message.

For example, assuming that the first network element is the AF 1, and the second network element is the NEF, after receiving the third request message from the AF 1, the NEF may determine a first federated training group or a first federated learning alliance based on the first group identifier or the information about the vertical federation carried in the third request message, and feed back an NF instance and/or an AF instance, for example, an NF 1, the AF 2, and an NF 2, to the AF 1.

S404: The second network element sends the third response message to the third network element. Correspondingly, the third network element receives the third response message from the second network element.

For example, assuming that the third network element is a task coordinator, and the second network element is an NRF, after receiving the third request message from the task coordinator, the NRF may determine the first federated training group or the first federated learning alliance based on the first group identifier or the information about the vertical federation carried in the third request message, and may feed back, to the task coordinator, an NF instance and/or an AF instance in the first federated training group, for example, one or more of the AF 2, the NF 1, or the NF 3.

For example, assuming that the first network element is the AF 1, and the second network element is the NEF, after receiving the third request message from the AF 1, the NEF may feed back an NF instance and an AF instance, for example, the AF 2 and an NF 3, to the AF 1 based on the NF type and the AF type that are carried in the third request message.

Optionally, if the foregoing steps S401 and S403 are not performed, or S403 is not performed, the third network element may send the at least one candidate entity and the role information of the at least one candidate entity to the first network element after performing step S404. For details, refer to step S404a.

S404a: The third network element sends the at least one candidate entity and the role information of the at least one candidate entity to the first network element. Correspondingly, the first network element receives the at least one candidate entity and the role information of the at least one candidate entity from the third network element.

In other words, the first network element may directly or indirectly obtain the at least one candidate entity and the role information of the at least one candidate entity from the second network element.

S440: The first network element determines the first entity and a first role.

The first role indicates a role of the first entity in performing the first federated learning task. It may be understood as that the first role indicates an identity, a role, or a function of the first entity in performing the first federated learning task.

Optionally, a quantity of first entities is not limited in this application, and there may be one or more first entities.

In an implementation, the first network element obtains the at least one candidate entity and the role information of the at least one candidate entity from the second network element based on step S403, to select or determine the first entity and the first role from the at least one candidate entity and the role information of the at least one candidate entity.

In another implementation, that the first network element obtains the at least one candidate entity and the role information of the at least one candidate entity from the third network element, to select or determine the first entity and the first role from the at least one candidate entity and the role information of the at least one candidate entity may be an internal implementation behavior of the first network element, or may be that the first network element selects or determines the first entity and the first role from the at least one candidate entity and the role information of the at least one candidate entity according to a predefined constraint rule. This is not specifically limited in this application.

For example, it is assumed that there are three candidate entities: the AF 1, the AF 2, and the NF 3, the AF 1 supports provision of a label in the first federated learning task, the AF 2 supports provision of a label and data in the first federated learning task, and the NF 3 supports provision of data in the first federated learning task. For example, the first network element may use the AF 1 as a primary participant, and use the AF 2 and the NF 3 as secondary participants. To be specific, the first entities include the AF 1, the AF 2, and the NF 3, the first role of the AF 1 indicates that the AF 1 provides a label in the first federated learning task, the first role information of the AF 2 indicates that the AF 2 provides data in the first federated learning task, and the first role information of the NF 3 indicates that the NF 3 provides data in the first federated learning task. For another example, the first network element may use the AF 2 as a primary participant, and use the NF 3 as a secondary participant. To be specific, the first entity includes the AF 2 and the NF 3, the first role of the AF 2 indicates that the AF 2 provides a label and data in the first federated learning task, and the first role information of the NF 3 indicates that the NF 3 provides data in the first federated learning task. In other words, the first network element may determine all entities in the candidate entities as the first entities, or may determine most entities in the candidate entities as the first entities. This is not limited in this application. Optionally, this depends on factors such as current load and/or current capability information of the candidate entities.

Optionally, when the candidate entities include multiple entities that can provide labels in the first federated learning task, the first network element may select one of the entities as the primary participant based on content logic or randomly select one of the entities as the primary participant. It should be understood that, in the first federated learning task, there is only one entity that provides a label. In other words, entities participating in performing the first federated learning task may perform federated learning training by using the same label.

Optionally, in an implementation, before the first network element determines the first entity and the first role, the first network element obtains the first analytics identifier. The first analytics identifier corresponds to the first federated learning task. The first network element determines, based on the first analytics identifier, to trigger the first federated learning task.

For example, that the first network element obtains the first analytics identifier may be: The first network element may receive a subscription request message from a consumer (for example, an NWDAF containing AnLF or an NWDAF containing MTLF), where the subscription request message includes the first analytics identifier, and the subscription request message is used to subscribe to federated learning model provisioning or training. The subscription request message may be a model subscription request message or an analytics subscription request message.

For example, the first analytics identifier may be predefined or preconfigured. The predefinition may include a definition provided in advance, for example, a definition in a protocol. The preconfiguration may be implemented by pre-storing corresponding code, table, character string, or another manner indicating the first analytics identifier in the first network element. A specific implementation of the first analytics identifier is not limited in this application.

It should be understood that the first analytics identifier may indicate a specific function or service, and the specific function or service is related to a model, that is, the model may be used to perform the specific function or service, or the model supports performing the specific function or service corresponding to the first analytics identifier. The specific function or service may be network performance analytics or the like. That the first analytics identifier corresponds to the first federated learning task may be understood as follows: The first analytics identifier indicates the first federated learning task.

Optionally, the first network element may alternatively obtain other information, and determine, based on a correspondence between the other information and the first federated learning task, to trigger the first federated learning task. For example, the other information may include one or more of the following: the first group identifier, the first analytics identifier, the first interoperability indicator, a task identifier corresponding to the first federated learning task, or the information about the vertical federation. For specific explanations, refer to the following related descriptions.

Optionally, before step S440 is performed, that is, before the first network element determines the first entity and the first role, the first network element may confirm with the at least one candidate entity whether the at least one candidate entity agrees to perform or supports performing the first federated learning task in an allocated role. It should be understood that the at least one candidate entity includes the first entity. For ease of description, the following provides descriptions by using an example in which the first network element confirms with the first entity whether the at least one candidate entity agrees to perform or supports performing the first federated learning task as the allocated first role or the first role carried in the second request message. For details, refer to the following steps S411 to S413 (not shown in the figure).

S411: The first network element sends a second request message to the first entity. Correspondingly, the first entity receives the second request message from the first network element. The second request message is used to request the first entity to prepare to perform the first federated learning task.

Optionally, the second request message includes one or more of the following, and for specific explanations, refer to the foregoing related descriptions:
(1) at least one role supported by the first entity in the first federated learning task, where the at least one supported role includes the first role; and
   it should be understood that the first entity may support one or more identities in the first federated learning task, for example, including one or more of the following: provision of a label, provision of data, or coordinating the first entity in performing the first federated learning task;
(2) information about some or all of the entities performing the first federated learning task, for example, identifiers and/or role information of the some or all of the entities;
(3) the first analytics identifier;
(4) the first group identifier;
(5) the first role;
(6) information about the third network element, where the third network element supports coordinating the first entity in performing the first federated learning task, for example, a coordinator ID;
(7) a network identifier, for example, a PLMN ID, where
   the network identifier indicates a specific network in which the first network element requests the first entity to prepare to perform the first federated learning task;
(8) the task identifier corresponding to the first federated learning task, where the task identifier identifies the first federated learning task; or
(9) the information about the vertical federation.

It should be noted that in this embodiment of this application, the first entity may support one or more identities in the first federated learning task. For example, it is assumed that the first entity supports multiple identities in the first federated learning task. To be specific, the first entity supports both provision of a label in the first federated learning task and provision of data in the first federated learning task. In comparison, the first role indicates a role of the first entity in performing the first federated learning task, and may be that the first entity provides only a label in the first federated learning task, or may be that the first entity provides only data in the first federated learning task, or may be that the first entity provides a label and data in the first federated learning task. In other words, the role supported by the first entity in the first federated learning task may be a primary participant and/or a secondary participant, and the first role may be a primary participant or a secondary participant. That is, the first role belongs to the role supported by the first entity in the first federated learning task.

Optionally, in an implementation, the first network element may send a fourth request message to the third network element. Correspondingly, the third network element receives the fourth request message from the first network element. The fourth request message is used to request the first entity to prepare to perform the first federated learning task. In other words, the first network element may directly or indirectly request the first entity to prepare to perform the first federated learning task. For a parameter included in the fourth request message and a meaning of the parameter, refer to the related descriptions of the parameter included in the second request message and the meaning of the parameter. Details are not described herein again.

S412: The first entity determines whether to agree to perform the first federated learning task.

For example, after verifying a role of the first network element, the first entity may determine, based on a current load status of the first entity and/or whether the first entity currently has a capability of performing the first federated learning task, whether to agree to perform the first federated learning task, for example, agree to or disagree to perform the first federated learning task.

Optionally, if the second request message carries the first role, the first entity determines whether to support performing the first federated learning task in the first role, or whether the first entity currently has the capability of performing the first federated learning task in the first role, to agree or disagree to perform the first federated learning task in the first role.

Optionally, if the second request message carries the role supported by the first entity in the first federated learning task, the first entity may determine, based on the current load status of the first entity and/or whether the first entity currently has the capability of performing the first federated learning task, whether to agree to perform the first federated learning task, or the first entity may determine, based on the current load status of the first entity and/or whether the first entity currently has the capability of performing the first federated learning task, whether to agree to perform the first federated learning task as the supported role.

Optionally, if the first entity agrees to perform the first federated learning task, the following step S413 may be performed. It should be understood that the technical solutions of this application are performed on a basis that the first entity agrees to perform the first federated learning task.

Optionally, if the first entity disagrees to perform the first federated learning task, the first entity may send a failure cause value to the first network element, to indicate that the first entity rejects to perform the first federated learning task. For example, the first entity refuses to perform the first federated learning task in the first role. The failure cause value may be that the first entity is currently overloaded, or the first entity currently does not support the first role, or the first entity currently does not have the capability of performing the first federated learning task in the first role.

S413: The first entity sends a second response message to the first network element. Correspondingly, the first network element receives the second response message from the first entity. The second response message indicates that the first entity agrees to perform or supports performing the first federated learning task in the first role.

Optionally, if the second request message carries the first role, when agreeing to perform the first federated learning task, the first entity may include the first role in the second response message, to indicate that the first entity agrees to perform or supports performing the first federated learning task in the first role.

Optionally, if the second request message carries the role supported by the first entity in the first federated learning task, the first entity may send the first role to the first network element when agreeing to perform the first federated learning task, to indicate that the first entity agrees to perform or supports performing the first federated learning task in the first role. It should be understood that the role supported by the first entity in the first federated learning task includes the first role. Optionally, the second response message may carry the role supported by the first entity in the first federated learning task, to indicate that the first entity agrees to perform the first federated learning task in an identity or a role allocated by the first network element. The identity or role allocated by the first network element includes the first role.

Optionally, if the second request message received by the first entity carries the parameter (6): the information about the third network element, the second response message may further indicate that the first entity agrees that the third network element coordinates with the first entity to perform the first federated learning task.

It should be noted that the foregoing steps S411 to S413 are described by using an example in which the first network element confirms with the at least one candidate entity whether the at least one candidate entity agrees to perform or supports performing the first federated learning task in the allocated role. Optionally, before step S440 is performed, that is, before the first network element determines the first entity and the first role, the third network element (for example, the coordinator) may confirm with the at least one candidate entity whether the at least one candidate entity agrees to perform or supports performing the first federated learning task in an allocated role. For details, refer to the following steps S414 to S416 (not shown in the figure).

S414: The third network element sends an eighth request message to the at least one candidate entity. Correspondingly, the at least one candidate entity receives the eighth request message from the third network element. The eighth request message is used to request the at least one candidate entity to perform the first federated learning task, and the eighth request message includes the role information of the at least one candidate entity.

Optionally, the eighth request message includes one or more of the following, and for specific explanations, refer to the foregoing related descriptions:
(1) the role supported by the at least one candidate entity in the first federated learning task, where
   it should be understood that the at least one candidate entity may support one or more identities in the first federated learning task, including one or more of the following: provision of a label, provision of data, or coordinating the first entity in performing the first federated learning task;
(2) the information about some or all of the entities performing the first federated learning task, for example, the identifiers and/or the role information of the some or all of the entities;
(3) the first analytics identifier;
(4) the first group identifier;
(5) the first role;
(6) information about the third network element, where the third network element supports coordinating the first entity in performing the first federated learning task, for example, a coordinator ID;
(7) a network identifier, for example, a PLMN ID, where
(8) the task identifier corresponding to the first federated learning task, where the task identifier identifies the first federated learning task; or
(9) the information about the vertical federation.

S415: The at least one candidate entity determines whether to agree to perform the first federated learning task.

For example, after verifying a role of the third network element, the at least one candidate entity may determine, based on a current load status of the at least one candidate entity and/or whether the at least one candidate entity currently has a capability of performing the first federated learning task, whether to agree to perform the first federated learning task, for example, agree to or disagree to perform the first federated learning task.

Optionally, if the eighth request message carries the first role, the at least one candidate entity determines whether to support performing the first federated learning task in the first role, or whether the at least one candidate entity currently has the capability of performing the first federated learning task in the first role, to agree or disagree to perform the first federated learning task in the first role.

Optionally, if the eighth request message carries the role supported by the at least one candidate entity in the first federated learning task, the at least one candidate entity may determine, based on the current load status of the at least one candidate entity and/or whether the at least one candidate entity currently has the capability of performing the first federated learning task, whether to agree to perform the first federated learning task, or the at least one candidate entity may determine, based on the current load status of the at least one candidate entity and/or whether the at least one candidate entity currently has the capability of performing the first federated learning task, whether to agree to perform the first federated learning task as the supported role.

Optionally, if the at least one candidate entity agrees to perform the first federated learning task, the following step S416 may be performed. It should be understood that the technical solutions of this application are performed on a basis that the at least one candidate entity agrees to perform the first federated learning task.

Optionally, if the at least one candidate entity does not agree to perform the first federated learning task, the at least one candidate entity may send a failure cause value to the first network element, to indicate that the at least one candidate entity rejects to perform the first federated learning task. The failure cause value may be that the at least one candidate entity is currently overloaded, or the at least one candidate entity currently does not support a role of the at least one candidate entity, or the at least one candidate entity currently does not have the capability of performing the first federated learning task as the at least one candidate entity.

S416: The at least one candidate entity sends an eighth response message to the third network element. Correspondingly, the third network element receives the eighth response message from the at least one candidate entity. The eighth response message indicates that the at least one candidate entity agrees to perform the first federated learning task as the candidate entity.

Optionally, if the eighth request message carries the first role, when agreeing to perform the first federated learning task, the at least one candidate entity may include the first role in the eighth response message, to indicate that the at least one candidate entity agrees to support performing the first federated learning task in the first role.

Optionally, if the eighth request message carries the role supported by the at least one candidate entity in the first federated learning task, the at least one candidate entity may send, to the third network element when agreeing to perform the first federated learning task, the role supported in the first federated learning task, to indicate that the at least one candidate entity agrees to support performing the first federated learning task in the first role. It should be understood that the at least one candidate entity includes the first entity, and the role supported by the first entity in the first federated learning task includes the first role. Optionally, the eighth response message may carry the role supported by the at least one candidate entity in the first federated learning task, to indicate that the at least one candidate entity agrees to perform the first federated learning task in the allocated identity or role.

Optionally, if the eighth request message received by the at least one candidate entity carries the parameter (6): the information about the third network element, the eighth response message may further indicate that the at least one candidate entity agrees that the third network element coordinates with the at least one candidate entity to perform the first federated learning task.

It should be noted that one of the steps S411 to S413 or the steps S414 to S416 may be performed. In other words, an execution body for determining whether the at least one candidate entity agrees to perform or supports performing the first federated learning task in the allocated role is not limited in this application, for example, the first network element, the third network element, or another network element having a triggering capability.

Based on the foregoing implementation, when the first entity agrees to perform the first federated learning task in the first role, the first network element may finally determine the first entity for performing the first federated learning task and the first role, to trigger the first entity to perform the first federated learning task. For details, refer to the following step S450. For a specific process of performing the first federated learning task, refer to the related descriptions in the foregoing method 300. Details are not described herein again.

S450: The first network element sends a first request message to the first entity. Correspondingly, the first entity receives the first request message from the first network element.

The first request message is used to request the first entity to perform the first federated learning task in the first role. In other words, the first network element requests the first entity to perform the first federated learning task in the first role. For example, the first role includes a primary participant or a secondary participant. For a specific explanation, refer to the related descriptions of step S420.

Optionally, the first network element may directly send the first request message to the first entity. Alternatively, the first network element may first send a sixth request message to the third network element (for example, the coordinator). The sixth request message is used to request to create or coordinate the first federated learning task, and the sixth request message includes the first entity and the first role. Correspondingly, after receiving the sixth request message, the third network element organizes the first entity to perform the first federated learning task in the first role. In this way, the third network element may send a first federated learning task initialization request message to the first entity, to request the first entity to perform the first federated learning task in the first role.

Optionally, the sixth request message may further include one or more of the following, and for specific explanations, refer to the foregoing related descriptions:
(1) the first analytics identifier;
(2) the first group identifier;
(3) the information about some or all of the entities performing the first federated learning task, where the information about some or all of the entities includes the identifiers and/or the role information;
(4) the task identifier corresponding to the first federated learning task, where the task identifier identifies the first federated learning task; or
(5) the information about the vertical federation.

Optionally, the first request message may further include one or more of the following, and for specific explanations, refer to the foregoing related descriptions:
(1) the first analytics identifier;
(2) the first role;
(3) the first group identifier;
(4) the information about some or all of the entities performing the first federated learning task, where the information about some or all of the entities includes the identifiers and/or the role information;
(5) the information about the third network element, for example, an identifier of the third network element and/or role information of the third network element, where
   in other words, the first network element may send the first role to any first entity that performs the first federated learning task, or may send, to the first entity, an identifier and/or role information of another entity that performs the first federated learning task;
(6) the task identifier corresponding to the first federated learning task, where the task identifier identifies the first federated learning task; or
(7) the information about the vertical federation.

It should be noted that the foregoing step S450 is described by using an example in which the first network element (for example, the task initiator) triggers the first entity to be requested to perform the first federated learning task in the first role. Optionally, in an implementation, the third network element (for example, the coordinator) may alternatively trigger the first entity to be requested to perform the first federated learning task in the first role. For details, refer to the following steps S405 to S407.

S405: The third network element obtains the first entity and the first role.

The first role indicates the role of the first entity in performing the first federated learning task.

Optionally, in an implementation, the third network element may obtain the first entity and the first role from the first network element. For details, refer to the following step S406.

S406: The first network element sends the first entity and the first role to the third network element. Correspondingly, the third network element receives the first entity and the first role from the first network element.

For example, the first network element may send the first entity and the first role to the third network element through the sixth request message in step S450.

Optionally, in an implementation, the third network element may determine the first entity and the first role. For example, after obtaining the at least one candidate entity and the role information of the at least one candidate entity in step S404, the third network element finally determines the first entity and the first role after performing the foregoing steps S414 to S416 to determine whether the at least one candidate entity agrees to perform the first federated learning task. For an implementation in which the third network element determines the first entity and the first role, refer to the implementation of the first network element in step S440. This is not specifically limited herein.

Optionally, in an implementation, the third network element may obtain the first entity and the first role from another network element. The another network element may be a UDM, a UDR, a third-party server, or the like. This is not specifically limited in this application.

For example, after obtaining the first entity and the first role, the third network element may trigger performing of the following step S407.

S407: The third network element sends a seventh request message to the first entity. Correspondingly, the first entity receives the seventh request message from the third network element.

The seventh request message is used to request the first entity to perform the first federated learning task, and the seventh request message includes the first role.

Optionally, the first entity determines whether a sender in step S407, namely, the third network element, is consistent with the information about the third network element carried in the second request message in step S411. If the sender is consistent with the information, the first entity executes the first federated learning task in the first role. If the sender is inconsistent with the information, the first entity may reject to perform the first federated learning task. In this implementation, the first entity determines whether information about the third network element that is allocated by the first network element is the same as the information about the third network element that triggers performing of the first federated learning task, so that the first entity can be prevented from performing another federated learning task initiated by a malicious third network element, to ensure network security and reduce processing load or signaling overheads of the first entity.

It should be noted that one of step S450 or step S407 may be performed. In other words, an execution body for triggering the first entity to be requested to perform the first federated learning task is not limited in this application, for example, the first network element, the third network element, or another network element having a triggering capability.

Optionally, before performing step S405 or S406, the first network element may determine whether the third network element agrees to coordinate or supports coordinating the first entity in performing the first federated learning task. For details, refer to the following steps S417 and S418 (not shown in the figure).

S417: The first network element sends a fifth request message to the third network element. Correspondingly, the third network element receives the fifth request message from the first network element. The fifth request message is used to request the third network element to coordinate with the first entity to perform the first federated learning task.

Optionally, the fifth request message may include one or more of the following: the first analytics identifier; the first group identifier; the information about some or all of the entities that perform the first federated learning task, where the information about some or all of the entities includes the identifiers and/or the role information; the information about the third network element; or the task identifier corresponding to the first federated learning task. For specific explanations, refer to the foregoing related descriptions.

S418: The third network element sends a fifth response message to the first network element. Correspondingly, the first network element receives the fifth response message from the third network element. The fifth response message indicates that the third network element agrees to coordinate or supports coordinating the first entity in performing the first federated learning task.

Optionally, if the third network element disagrees to coordinate with the first entity to perform the first federated learning task, the third network element may send a failure cause value to the first network element, to indicate that the third network element rejects to coordinate with the first entity to perform the first federated learning task. The failure cause value may be that the third network element is currently overloaded, or the third network element currently does not support a role of the coordinator, or the third network element currently does not have a capability of coordinating with the first entity to perform the first federated learning task.

It should be understood that this implementation is performed on a basis that the third network element agrees to coordinate with the first entity to perform the first federated learning task.

According to the foregoing provided solution, the first network element may finally determine the first entity for performing the first federated learning task and the first role, and notify the first entity of the first role in performing the first federated learning task, so that the first entity can perform the first federated learning task in the first role, to effectively improve efficiency of performing the first federated learning task.

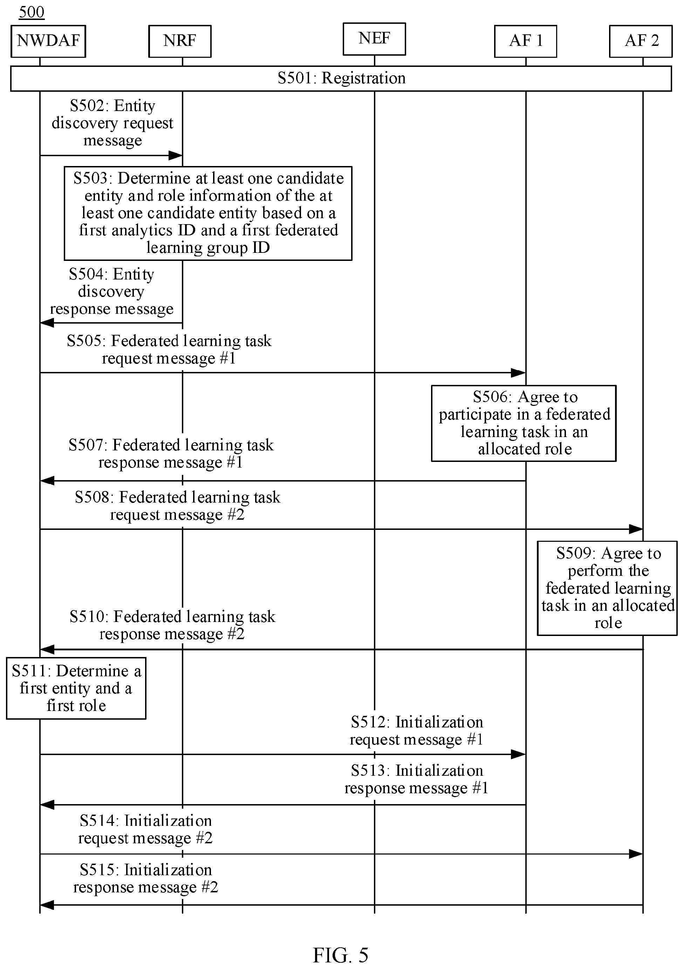

FIG. 5 is a schematic flowchart of a communication method 500 according to an embodiment of this application. As shown in FIG. 5, a first network element (for example, a task initiator) being an NWDAF, a second network element (for example, an entity discovery function network element) being an NRF, and task participants being an AF 1 and an AF 2 serve as execution bodies for interaction. The method may be considered as a further refinement of the foregoing method 400. It should be understood that the embodiment shown in FIG. 5 and the embodiment shown in FIG. 4 may be coupled to each other, and may be mutually referenced. Therefore, the related descriptions in the foregoing method 400 are also applicable to this implementation. A same or similar technical means may exist between the embodiment shown in FIG. 5 and the embodiment shown in FIG. 4, and content described in the embodiment shown in FIG. 4 is not described again. The method includes the following multiple steps. For a part that is not described in detail, refer to the foregoing method 400 or the existing protocol.

S501: A vertical federated participating entity initiates a registration procedure to a vertical federated entity discovery function network element. For a specific registration procedure, refer to the related descriptions in the method 200. Details are not described herein again.

Optionally, in an implementation, the vertical federated participating entities include the NWDAF, the AF 1, and the AF 2, and the federated entity discovery function network element may be the NRF or an NEF. In this case, the NWDAF, the AF 1, and the AF 2 each send the registration request message to the NRF, to request to register with a network. For ease of description, in this implementation, an example in which the NWDAF is a task initiator, and the AF 1 and the AF 2 are task participants is used for description.

The registration request message may carry a profile (profile) of the vertical federated participating entity. The profile may include identification information of the entity, a type of the entity, a first analytics ID, an ID of a first federated learning group that the entity joins (for example, the ID of the first federated learning group may be indicated using an AF ID, a PLMN ID, a vendor ID, a UE ID, or the like), a supported role, or the like. For specific meanings of the parameters, refer to the related descriptions in the method 400. For example, a first federated learning task includes one or more of model training, face recognition, or cross-institutional medical data analytics.

It should be noted that a granularity level of the parameter carried in the registration request message is not limited in this embodiment of this application.

S502: The NWDAF sends an entity discovery request message (namely, an example of a third request message) to the NRF. Correspondingly, the NRF receives the entity discovery request message from the NWDAF.

For a parameter included in the entity discovery request message and a specific explanation, refer to the related descriptions of the third request message in step S401 in the foregoing method 400.

S503: The NRF determines at least one candidate entity and role information of the at least one candidate entity, for example, the AF 1 and the AF 2, based on the first analytics ID and the ID of the first federated learning group. For a specific implementation, refer to the related descriptions of step S420 in the foregoing method 400.

Optionally, the NRF may alternatively determine the at least one candidate entity and the role information of the at least one candidate entity based on another parameter carried in the entity discovery request message, for example, information about a vertical federation and/or a first interoperability indicator.

S504: The NRF sends an entity discovery response message (namely, an example of a third response message) to the NWDAF. Correspondingly, the NWDAF receives the entity discovery response message from the NRF.

For a parameter included in the entity discovery response message and a specific explanation, refer to the related descriptions of the third response message in step S403 in the method 400.

Further, the NWDAF may request the at least one candidate entity (for example, the AF 1 and the AF 2) to prepare to perform the first federated learning task. For details, refer to the following steps S505 to S510.

S505: The NWDAF sends a federated learning request task request message #1 (namely, an example of a second request message) to the AF 1. Correspondingly, the AF 1 receives the federated learning request task request message #1 from the NWDAF.

For example, the NWDAF may send the federated learning request task request message #1 to the AF 1 via the NEF.

For a parameter included in the federated learning request task request message #1 and a specific explanation, refer to the related descriptions of the second request message in the foregoing method 400.

S506: The AF 1 agrees to participate in the federated learning task in an allocated role.

S507: The AF 1 sends a federated learning request task response message #1 (namely, an example of a second response message) to the NWDAF. Correspondingly, the NWDAF receives the federated learning request task response message #1 from the AF 1.

For example, the AF 1 may send the federated learning request task response message #1 to the NWDAF via the NEF.

For a parameter included in the federated learning request task request response #1 and a specific explanation, refer to the related descriptions of the second response message in the foregoing method 400.

S508: The NWDAF sends a federated learning request task request message #2 (namely, an example of the second request message) to the AF 2. Correspondingly, the AF 2 receives the federated learning request task request message #2 from the NWDAF.

For example, the NWDAF may send the federated learning request task request message #2 to the AF 2 via the NEF.

For a parameter included in the federated learning request task request message #2 and a specific explanation, refer to the related descriptions of the second request message in the foregoing method 400.

S509: The AF 2 agrees to participate in the federated learning task in an allocated role.

S510: The AF 2 sends a federated learning request task response message #2 (namely, an example of the second response message) to the NWDAF. Correspondingly, the NWDAF receives the federated learning request task response message #2 from the AF 2.

For example, the AF 2 may send the federated learning request task response message #2 to the NWDAF via the NEF.

For a parameter included in a federated learning request task request response #2 and a specific explanation, refer to the related descriptions of the second response message in the foregoing method 400.

It should be noted that, for specific implementations of steps S505 to S510, refer to the related descriptions of steps S411 to S413 in the foregoing method 400. For brevity, details are not described herein again.

S511: The NWDAF determines a first entity and a first role.

For example, the NWDAF may determine the first entity and the first role based on feedback in steps S507 and S510. For example, the first entities include the AF 1 and the AF 2. Correspondingly, a first role of the AF 1 may be a primary participant, that is, the AF 1 provides a label in performing the first federated learning task, and a first role of the AF 2 may be a secondary participant, that is, the AF 2 provides data in performing the first federated learning task.

For example, the NWDAF may determine the first entity and the first role based on the feedback in steps S507 and S510. For example, the first entities include the AF 1, the AF 2, and the NWDAF. Correspondingly, a first role of the NWDAF may be a primary participant, that is, the NWDAF provides a label in performing the first federated learning task. Optionally, the NWDAF 1 may also provide data in the first learning task. The first identities of the AF 1 and the AF 2 may be secondary participants, that is, the AF 1 and the AF 2 provide data in preforming the first federated learning task.

Optionally, the NWDAF may participate in performing the first federated learning task, or may not participate in performing the federated learning task. This is not limited in this application. In other words, the first entities performing the first federated learning task may include the AF 1, the AF 2, and the NWDAF, or the first entities performing the first federated learning task may include the AF 1 and the AF 2.

Further, after determining the first entity and the first role, the NWDAF may trigger the first entity to be requested to perform the first federated learning task, and the following steps S512 to S514 are specifically included.

S512: The NWDAF sends an initialization request message #1 (namely, an example of a first request message) to the AF 1. Correspondingly, the AF 1 receives the initialization request message #1 from the NWDAF.

For a parameter included in the initialization request message #1 and a specific explanation, refer to the related descriptions of the first request message in the foregoing method 400.

S513: The AF 1 sends an initialization response message #1 to the NWDAF. Correspondingly, the NWDAF receives the initialization response message #1 from the AF 1.

The initialization response message #1 indicates that the AF 1 determines to subsequently perform the first federated learning task in an allocated role. For a specific federated learning process, refer to the related descriptions in the foregoing method 300.

S514: The NWDAF sends an initialization request message #2 (namely, an example of the first request message) to the AF 2. Correspondingly, the AF 2 receives the initialization request message #2 from the NWDAF.

For a parameter included in the initialization request message #2 and a specific explanation, refer to the related descriptions of the first request message in the foregoing method 400.

S515: The AF 2 sends an initialization response message #2 to the NWDAF. Correspondingly, the NWDAF receives the initialization response message #2 from the AF 2.

The initialization response message #2 indicates that the AF 2 determines to subsequently perform the first federated learning task in an allocated role. For a specific federated learning process, refer to the related descriptions in the foregoing method 300.

According to the foregoing solution, the NWDAF, as the task initiator, obtains the at least one candidate entity and the role information of the at least one candidate entity, and triggers confirmation with the at least one candidate entity whether the at least one candidate entity agrees to perform the first federated learning task, to finally determine the first entity participating in performing the first federated learning task and the first role. In this implementation, the task initiator triggers a federated learning task initialization request, and notifies the first entity of the first role in performing the first federated learning task. This can effectively improve efficiency of performing the first federated learning task.

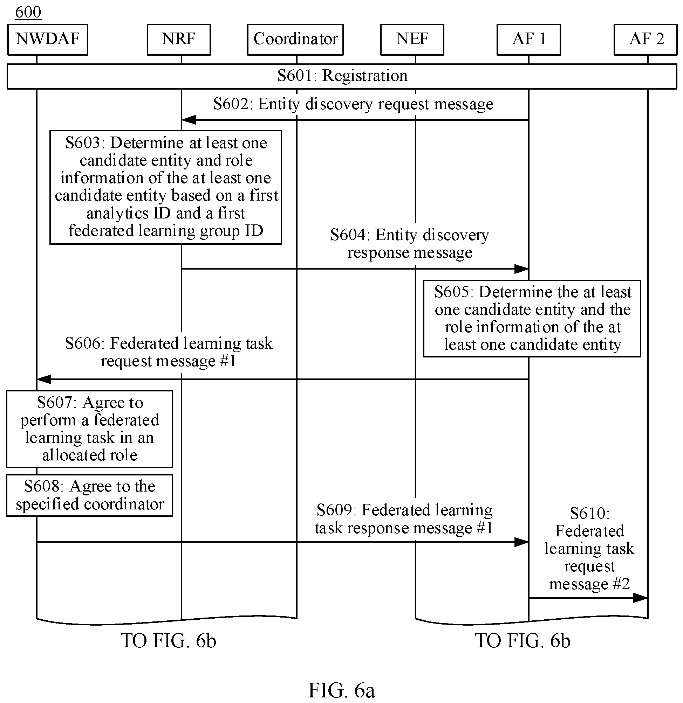

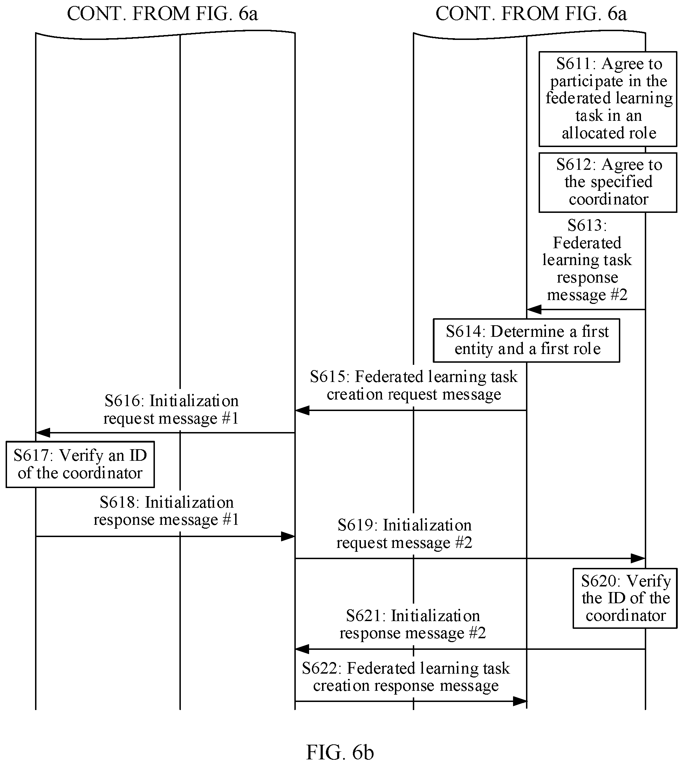

It should be understood that, in FIG. 5, the NWDAF, as the task initiator, initiates the first federated learning task. In other words, the NWDAF determines the first entity for performing the first federated learning task and the first role, and triggers sending of the federated learning task initialization request to the first entity. Compared with FIG. 5, in FIG. 6(a) and FIG. 6(b), the AF 1 initiates a first federated learning task as a task initiator, and a third network element (for example, a coordinator) is used. When determining a first entity and a first role for performing the first federated learning task, the task initiator AF 1 triggers a coordinator to be requested to organize or coordinate with the first entity to complete the first federated learning task. That is, the coordinator triggers sending of a federated learning task initialization request to the first entity.

FIG. 6(a) and FIG. 6(b) are a schematic flowchart of a communication method 600 according to an embodiment of this application. As shown in FIG. 6(a) and FIG. 6(b), a first network element (for example, a task initiator) being an AF 1, a second network element (for example, an entity discovery function network element) being an NRF, a third network element being a coordinator, and task participants being an NWDAF and an AF 2 serve as execution bodies for interaction. The method may be considered as a further refinement of the foregoing method 400. It should be understood that the embodiment shown in FIG. 6(a) and FIG. 6(b) and the embodiment shown in FIG. 4 may be coupled to each other, and may be mutually referenced. Therefore, the related descriptions in the foregoing method 400 are also applicable to this implementation. A same or similar technical means may exist between the embodiment shown in FIG. 6(a) and FIG. 6(b) and the embodiment shown in FIG. 4, and content described in the embodiment shown in FIG. 4 is not described again. The method includes the following multiple steps. For a part that is not described in detail, refer to the foregoing method 400 or the existing protocol.

S601: The NWDAF, the AF 1, and the AF 2 initiate a registration procedure to the NRF. For a specific registration procedure, refer to the related descriptions in the foregoing method 200. For a parameter carried in the registration procedure, refer to the related descriptions of step S501 in the foregoing method 500.

S602: The AF 1 sends an entity discovery request message (namely, an example of a third request message) to the NRF. Correspondingly, the NRF receives the entity discovery request message from the AF 1.

For a parameter included in the entity discovery request message and a specific explanation, refer to the related descriptions of the third request message in step S402 in the method 400.

S603: The NRF determines at least one candidate entity and role information of the at least one candidate entity, for example, the NWDAF and the AF 2, based on a first analytics ID and an ID of a first federated learning group. For a specific implementation, refer to the related descriptions of step S420 in the foregoing method 400.

Optionally, the NRF may alternatively determine the at least one candidate entity and the role information of the at least one candidate entity based on another parameter carried in the entity discovery request message, for example, information about a vertical federation and/or a first interoperability indicator.

S604: The NRF sends an entity discovery response message (namely, an example of a third response message) to the AF 1. Correspondingly, the AF 1 receives the entity discovery response message from the NRF.

For a parameter included in the entity discovery response message and a specific explanation, refer to the related descriptions of the third response message in step S404 in the method 400.

S605: The AF 1 determines the at least one candidate entity and the role information of the at least one candidate entity.

Further, the AF 1 may request the at least one candidate entity (for example, the NWDAF and the AF 2) to prepare to perform the first federated learning task. For details, refer to the following steps S606 to S613.

S606: The AF 1 sends a federated learning task request message #1 (namely, an example of a second request message) to the NWDAF. Correspondingly, the NWDAF receives the federated learning task request message #1 from the AF 1.

For example, the AF 1 may send the federated learning task request message #1 to the NWDAF via the NEF.

For a parameter included in the federated learning request task request message #1 and a specific explanation, refer to the related descriptions of the second request message in the foregoing method 400.

S607: The NWDAF agrees to participate in the federated learning task in an allocated role.

S608: The NWDAF agrees to a specified negotiator. To be specific, the NWDAF agrees that the negotiator organizes or negotiates with the NWDAF to perform the first federated learning task.

S609: The NWDAF sends a federated learning request task response message #1 (namely, an example of a second response message) to the AF 1. Correspondingly, the NWDAF receives the federated learning request task response message #1 from the AF 1.

For example, the NWDAF may send the federated learning request task response message #1 to the AF 1 via the NEF.

For a parameter included in a federated learning request task request response #1 and a specific explanation, refer to the related descriptions of the second response message in the foregoing method 400.

S610: The AF 1 sends a federated learning request task request message #2 (namely, an example of the second request message) to the AF 2. Correspondingly, the AF 2 receives the federated learning request task request message #2 from the AF 1.

For example, the AF 1 may send the federated learning request task request message #2 to the AF 2 via the NEF.

For a parameter included in the federated learning request task request message #2 and a specific explanation, refer to the related descriptions of the second request message in the foregoing method 400.

S611: The AF 2 agrees to participate in the federated learning task in an allocated role.

S612: The AF 2 agrees to the specified negotiator. To be specific, the AF 2 agrees that the negotiator organizes or negotiates with the AF 2 to perform the first federated learning task.

S613: The AF 2 sends a federated learning request task response message #2 (namely, an example of the second response message) to the AF 1. Correspondingly, the AF 1 receives the federated learning request task response message #1 from the AF 2.

For example, the AF 2 may send the federated learning request task response message #1 to the AF 1 via the NEF.

For a parameter included in a federated learning request task request response #2 and a specific explanation, refer to the related descriptions of the second response message in the foregoing method 400.

It should be noted that, for specific implementations of steps S606 to S609 or steps S610 to S613, refer to the related descriptions of steps S411 to S413 in the foregoing method 400. For brevity, details are not described herein again.

S614: The AF 1 determines a first entity and a first role.

For example, the AF 1 may determine the first entity and the first role based on feedback in steps S609 and S613. For example, the first entities include the NWDAF and the AF 2. Correspondingly, a first role of the NWDAF may be a primary participant, that is, the NWDAF provides a label and data in performing the first federated learning task, and a first role of the AF 2 may be a secondary participant, that is, the AF 2 provides data in performing the first federated learning task.

Optionally, the AF 1 may participate in performing the first federated learning task, or may not participate in performing the federated learning task. This is not limited in this application. In other words, the first entities performing the first federated learning task may include the AF 1, the AF 2, and the NWDAF, or the first entities performing the first federated learning task may include the NWDAF and the AF 2.

Further, after determining the first entity and the first role, the AF 1 may trigger the negotiator to be requested to organize the first entity to perform the first federated learning task, and the following steps S615 to S622 are specifically included.

S615: The AF 1 sends a federated learning task creation request message (namely, an example of the sixth message) to the negotiator. Correspondingly, the negotiator receives the federated learning task creation request message from the AF 1.

For a parameter included in the federated learning task creation request message and a specific explanation, refer to the related descriptions of the sixth request message in the foregoing method 400.

S616: The negotiator sends an initialization request message #1 to the NWDAF. Correspondingly, the NWDAF receives the initialization request message #1 from the AF 1.

For a parameter included in the initialization request message #1 and a specific explanation, refer to the related descriptions of the first request message in the foregoing method 400.

S617: The NWDAF verifies an ID of the negotiator.

For example, the NWDAF compares whether the sender in step S616 is consistent with the negotiator determined in step S608. If the sender in step S616 is consistent with the negotiator determined in step S608, the following step S618 is performed. If the sender in step S616 is inconsistent with the negotiator determined in step S616, the NWDAF may reject to perform the initialization request in step S616. In this implementation, the NWDAF determines a negotiator ID allocated by the task initiator AF 1 and an ID of a negotiator triggering the federated learning task initialization request, so that the NWDAF can be prevented from performing a federated learning task initiated by a malicious negotiator, to ensure network security and reduce processing load or signaling overheads of the NWDAF.

S618: The NWDAF sends an initialization response message #1 to the AF 1. Correspondingly, the AF 1 receives the initialization response message #1 from the NWDAF.

The initialization response message #1 indicates that the AF 1 determines to subsequently perform the first federated learning task in an allocated role. For a specific federated learning process, refer to the related descriptions in the foregoing method 300.

S619: The negotiator sends an initialization request message #2 to the AF 2. Correspondingly, the AF 2 receives the initialization request message #2 from the negotiator.

For a parameter included in the initialization request message #2 and a specific explanation, refer to the related descriptions of the first request message in the foregoing method 400.

S620: The AF 2 verifies the ID of the negotiator.

S621: The AF 2 sends an initialization response message #2 to the AF 1. Correspondingly, the AF 1 receives the initialization response message #2 from the AF 2.

The initialization response message #2 indicates that the AF 2 determines to subsequently perform the first federated learning task in an allocated role. For a specific federated learning process, refer to the related descriptions in the foregoing method 300.

For specific implementations of steps S619 to S621, refer to the related descriptions of steps S616 to S618.

S622: The negotiator sends a federated learning task creation response message to the AF 1. Correspondingly, the AF 1 receives the federated learning task creation response message from the negotiator.

The federated learning task creation response message indicates that the negotiator has organized or negotiated with the NWDAF and the AF 2 to perform or complete the first federated learning task.

According to the foregoing solution, the AF 1, as the task initiator, obtains the at least one candidate entity and the role information of the at least one candidate entity, and triggers confirmation with the at least one candidate entity whether the at least one candidate entity agrees to perform the first federated learning task, to finally determine the first entity participating in performing the first federated learning task and the first role. In this implementation, the negotiator creates or coordinates the first federated learning task, triggers an initialization request of the first federated learning task, and notifies the first entity of the first role in performing the first federated learning task. This can effectively improve efficiency of performing the first federated learning task.

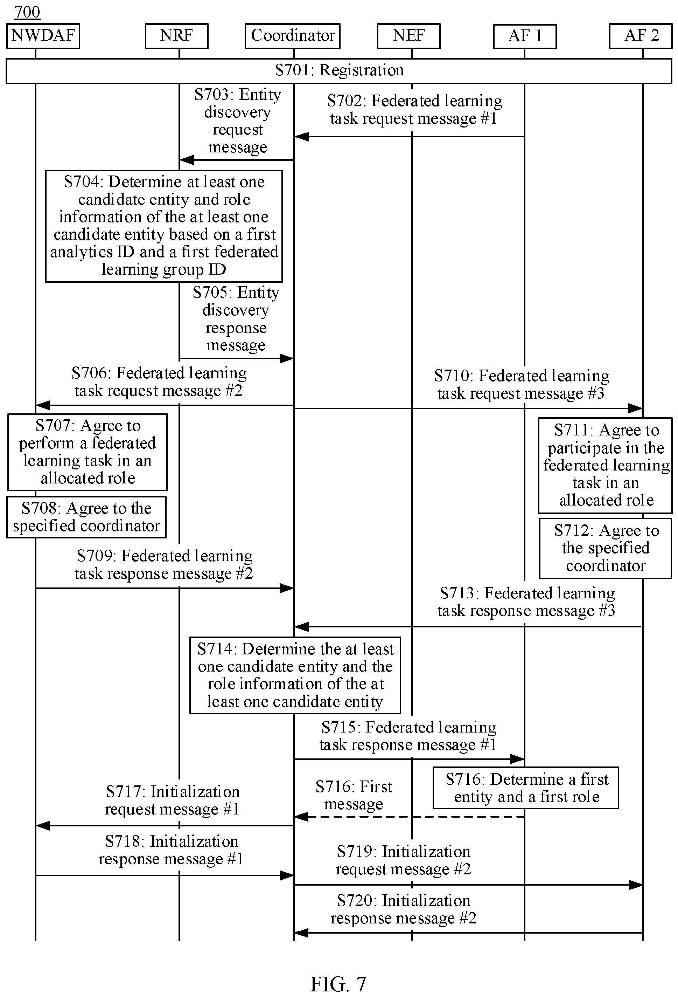

It should be understood that, in FIG. 6(a) and FIG. 6(b), the AF 1, as the task initiator, initiates the first federated learning task, and the AF 1 confirms with the at least one candidate entity whether the at least one candidate entity agrees to participate in the federated learning task as in allocated role. When determining the first entity for performing the first federated learning task and the first role, the NWDAF triggers the third network element (for example, the coordinator) to be requested to organize or coordinate with the first entity to complete the first federated learning task. That is, the coordinator triggers sending of the federated learning task initialization request to the first entity. Compared with FIG. 6(a) and FIG. 6(b), in FIG. 7, an AF 1, as a task initiator, initiates a first federated learning task, and a third network element (for example, a coordinator) is used. The coordinator confirms with at least one candidate entity whether the at least one candidate entity agrees to participate in the federated learning task in an allocated role. When the NWDAF determines a first entity and a first role for performing the first federated learning task, the coordinator triggers sending of a federated learning task initialization request to the first entity.

FIG. 7 is a schematic flowchart of a communication method 700 according to an embodiment of this application. As shown in FIG. 7, a first network element being an initiator, a second network element being an NRF, and a third network element being a coordinator serve as execution bodies for interaction. The method may be considered as a further refinement of the foregoing method 400. It should be understood that the embodiment shown in FIG. 7 and the embodiment shown in FIG. 4 may be coupled to each other, and may be mutually referenced. Therefore, the related descriptions in the foregoing method 400 are also applicable to this implementation. A same or similar technical means may exist between the embodiment shown in FIG. 7 and the embodiment shown in FIG. 4, and content described in the embodiment shown in FIG. 4 is not described again. The method includes the following multiple steps. For a part that is not described in detail, refer to the foregoing method 400 or the existing protocol.

S701: An NWDAF, an AF 1, and an AF 2 initiate registration procedures to the NRF. For a specific registration procedure, refer to the related descriptions in the foregoing method 200. For a parameter carried in the registration procedure, refer to the related descriptions of step S601 in the foregoing method 600.

S702: The AF 1 sends a federated learning task request message #1 to the coordinator. Correspondingly, the coordinator receives the federated learning task request message #1 from the AF 1.

For example, the AF 1 may send the federated learning task request message #1 to the coordinator via the NEF.

For a parameter included in the federated learning request task request message #1 and a specific explanation, refer to the related descriptions of the second request message in the foregoing method 400.

Further, the coordinator triggers obtaining of at least one candidate entity that performs the federated learning task and role information of the at least one candidate entity. For example, the coordinator may preconfigure or obtain, through signaling configuration, the candidate entity for performing the federated learning task; or the coordinator requests, from the NRF, to obtain the candidate entity for performing the federated learning task. Specifically, the following steps S703 to S705 are included.

S703: The coordinator sends an entity discovery request message (namely, an example of a third request message) to the NRF. Correspondingly, the NRF receives the entity discovery request message from the coordinator.

For a parameter included in the entity discovery request message and a specific explanation, refer to the related descriptions of the third request message in step S402 in the method 400.

S704: The NRF determines the at least one candidate entity and the role information of the at least one candidate entity, for example, the NWDAF and the AF 2, based on a first analytics ID and an ID of a first federated learning group. For a specific implementation, refer to the related descriptions of step S420 in the foregoing method 400.

Optionally, the NRF may alternatively determine the at least one candidate entity and the role information of the at least one candidate entity based on another parameter carried in the entity discovery request message, for example, information about a vertical federation and/or a first interoperability indicator.

S705: The NRF sends an entity discovery response message (namely, an example of a third response message) to the coordinator. Correspondingly, the coordinator receives the entity discovery response message from the NRF.

For a parameter included in the entity discovery response message and a specific explanation, refer to the related descriptions of the third response message in step S404 in the method 400.

Further, when determining the at least one candidate entity (for example, the NWDAF and the AF 2) and the role information of the at least one candidate entity, the coordinator may confirm with the at least one candidate entity whether the at least one candidate entity is willing or agrees to participate in performing the first federated learning task as in allocated role. Specifically, the following steps S706 to S713 are included.

S706: The coordinator sends a federated learning task request message #2 (namely, an example of an eighth request message) to the NWDAF. Correspondingly, the NWDAF receives the federated learning task request message #2 from the coordinator.

For example, the coordinator may send the federated learning task request message #2 to the NWDAF via the NEF.

For a parameter included in the federated learning request task request message #2 and a specific explanation, refer to the related descriptions of the eighth request message in the foregoing method 400.

S707: The NWDAF agrees to participate in the federated learning task in an allocated role.

S708: The NWDAF agrees to a specified negotiator. To be specific, the NWDAF agrees that the negotiator organizes or negotiates with the NWDAF to perform the first federated learning task.

S709: The NWDAF sends a federated learning request task response message #2 (namely, an example of the eighth response message) to the coordinator. Correspondingly, the NWDAF receives the federated learning request task response message #2 from the coordinator.

For example, the NWDAF may send the federated learning request task response message #2 to the coordinator via the NEF.

For a parameter included in a federated learning request task request response #2 and a specific explanation, refer to the related descriptions of the eighth response message in the foregoing method 400.

S710: The coordinator sends a federated learning request task request message #3 (namely, an example of the eighth request message) to the AF 2. Correspondingly, the AF 2 receives the federated learning request task request message #3 from the coordinator.

For example, the coordinator may send the federated learning request task request message #3 to the AF 2 via the NEF.

For a parameter included in the federated learning request task request message #3 and a specific explanation, refer to the related descriptions of the eighth request message in the foregoing method 400.

S711: The AF 2 agrees to participate in the federated learning task in an allocated role.

S712: The AF 2 agrees to the specified negotiator. To be specific, the AF 2 agrees that the negotiator organizes or negotiates with the AF 2 to perform the first federated learning task.

S713: The AF 2 sends a federated learning request task response message #3 (namely, an example of the eighth response message) to the AF 1. Correspondingly, the AF 1 receives the federated learning request task response message #3 from the AF 2.

For example, the AF 2 may send the federated learning request task response message #3 to the coordinator via the NEF.

For a parameter included in the federated learning request task request response #3 and a specific explanation, refer to the related descriptions of the eighth response message in the foregoing method 400.

It should be noted that, for specific implementations of steps S706 to S709 or steps S710 to S713, refer to the related descriptions of steps S411 to S413 in the foregoing method 400. For brevity, details are not described herein again.

S714: The negotiator determines the at least one candidate entity and the role information of the at least one candidate entity.

For example, the negotiator may determine the at least one candidate entity and the role information of the at least one candidate entity based on feedback in steps S709 and S713. It should be noted that the at least one candidate entity and the role information of the at least one candidate entity that are determined in step S714 may be completely the same as or different from the at least one candidate entity and the role information of the at least one candidate entity that are obtained in step S705. For example, the at least one candidate entity and the role information of the at least one candidate entity that are determined in step S714 are included in the at least one candidate entity and the role information of the at least one candidate entity that are obtained in step S705. This is not limited in this application.

S715: The negotiator sends a federated learning task response message #1 to the AF 1. Correspondingly, the AF 1 receives the federated learning task response message #1 from the negotiator. The federated learning task response message #1 includes the at least one candidate entity and the role information of the at least one candidate entity that are determined in step S714.

S716: The AF 1 determines a first entity and a first role.

It should be understood that the first entity belongs to the at least one candidate entity. For example, the AF 1 determines the first entity and the first role from the at least one candidate entity and the role information of the at least one candidate entity.

For example, if the at least one candidate entity includes the NWDAF and the AF 2, where the NWDAF can provide a label and data in performing the first federated learning task, and the AF 2 can provide data in performing the first federated learning task, the AF 1 may determine that the first entities include the NWDAF and the AF 2. A first role of the NWDAF may be a primary participant, for example, the NWDAF provides the label and the data in performing the first federated learning task. A first role of the AF 2 may be a secondary participant, for example, the AF 2 provides the data in performing the first federated learning task.

For example, if the at least one candidate entity includes the NWDAF and the AF 2, where both the NWDAF and the AF 2 can provide labels and data in performing the first federated learning task, the AF 1 may determine that the first entities include the NWDAF and the AF 2. A first role of the NWDAF may be a primary participant, and the NWDAF provides the label and the data in performing the first federated learning task. A first role of the AF 2 may be a secondary participant, and the AF 2 provides the data in performing the first federated learning task.

Optionally, the AF 1 may participate in performing the first federated learning task, or may not participate in performing the federated learning task. This is not limited in this application.

Optionally, after determining the first entity and the first role, the AF 1 may finally notify the negotiator of the first entity participating in performing the first federated learning task and the first role. For details, refer to the following step S716.

S716: The AF 1 sends a first message to the negotiator. Correspondingly, the negotiator receives the first message from the AF 1.

The first message indicates the first entity and the first role. It should be noted that, if the first entity and the first role that are finally determined by the AF 1 are completely consistent with the candidate entity and the role information of the candidate entity that are sent by the negotiator in step S715, the AF 1 may not perform step S716; and if the first entity and the first role that are finally determined by the AF 1 are inconsistent with the candidate entity and the role information of the candidate entity that are sent by the negotiator in step S715, the AF 1 needs to perform step S716, to notify the first entity finally performing the first federated learning task and the first role.

Further, after the negotiator obtains the first entity and the first role, the negotiator may trigger the first entity to be requested to perform the first federated learning task, and the following steps S717 to S720 are specifically included.

S717: The negotiator sends an initialization request message #1 to the NWDAF. Correspondingly, the NWDAF receives the initialization request message #1 from the AF 1.

For a parameter included in the initialization request message #1 and a specific explanation, refer to the related descriptions of the first request message in the foregoing method 400.

S718: The NWDAF sends an initialization response message #1 to the AF 1. Correspondingly, the AF 1 receives the initialization response message #1 from the NWDAF.

The initialization response message #1 indicates that the AF 1 determines to subsequently perform the first federated learning task in an allocated role. For a specific federated learning process, refer to the related descriptions in the foregoing method 300.

S719: The negotiator sends an initialization request message #2 to the AF 2. Correspondingly, the AF 2 receives the initialization request message #2 from the negotiator.

For a parameter included in the initialization request message #2 and a specific explanation, refer to the related descriptions of the first request message in the foregoing method 400.

S720: The AF 2 sends an initialization response message #2 to the AF 1. Correspondingly, the AF 1 receives the initialization response message #2 from the AF 2.

The initialization response message #2 indicates that the AF 2 determines to subsequently perform the first federated learning task in the allocated role. For a specific federated learning process, refer to the related descriptions in the foregoing method 300.

According to the foregoing solution, the AF 1, as the task initiator, triggers the negotiator to obtain the at least one candidate entity and the role information of the at least one candidate entity. In addition, the negotiator confirms with the at least one candidate entity whether the at least one candidate entity agrees to perform the first federated learning task. Finally, the AF 1 determines, from the at least one candidate entity and the role information of the at least one candidate entity, the first entity participating in performing the first federated learning task and the first role. In this implementation, the negotiator obtains the at least one candidate entity and the role information of the at least one candidate entity, triggers a federated learning task initialization request, and notifies the first entity of the first role in performing the first federated learning task. This can effectively improve efficiency of performing the first federated learning task.

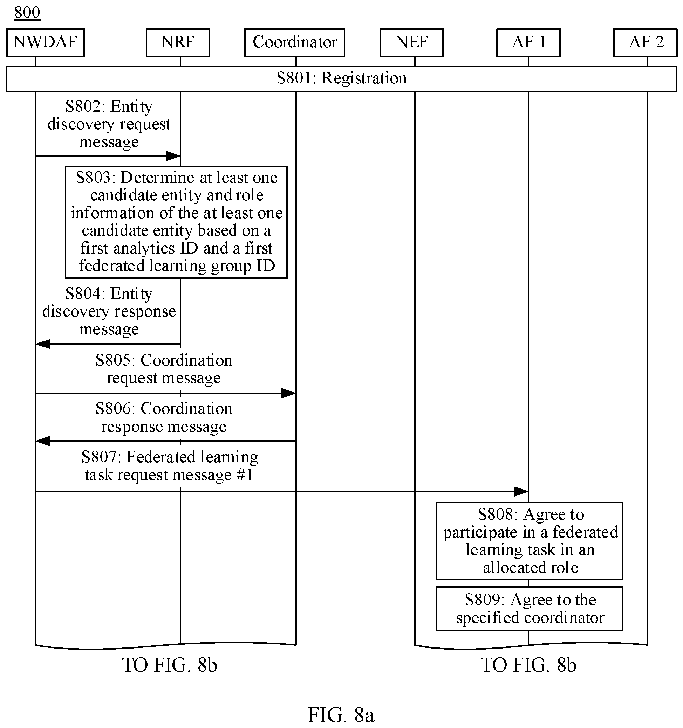

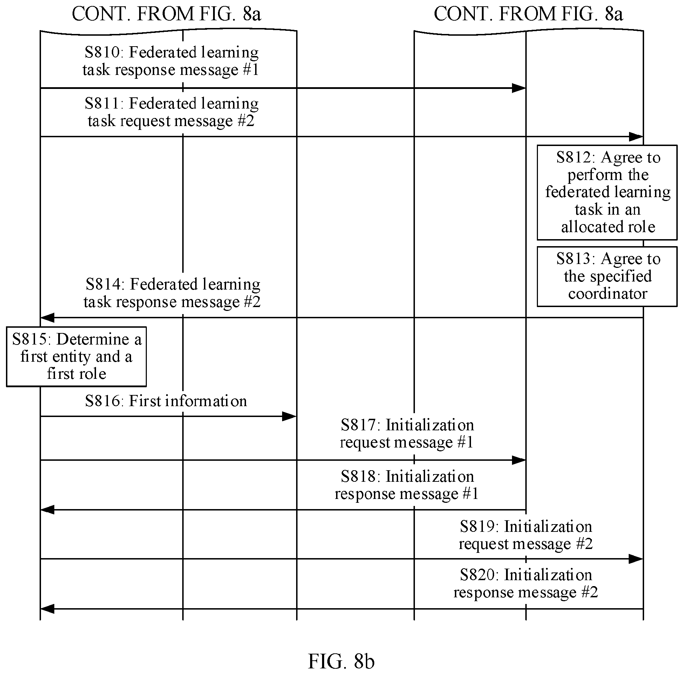

It should be understood that, in FIG. 5, the NWDAF, as the task initiator, initiates the first federated learning task. In other words, the NWDAF determines the first entity for performing the first federated learning task and the first role, and triggers sending of the federated learning task initialization request to the first entity. Compared with FIG. 5, in FIG. 8(a) and FIG. 8(b), an NWDAF, as a task initiator, initiates a first federated learning task, a third network element (for example, a coordinator) is used, and the coordinator organizes or coordinates with a first entity to complete the first federated learning task.

FIG. 8(a) and FIG. 8(b) are a schematic flowchart of a communication method 800 according to an embodiment of this application. As shown in FIG. 8(a) and FIG. 8(b), a first network element being an initiator, a second network element being an NRF, and a third network element being a coordinator serve as execution bodies for interaction. The method may be considered as a further refinement of the foregoing method 400. It should be understood that the embodiment shown in FIG. 8(a) and FIG. 8(b) and the embodiment shown in FIG. 4 may be coupled to each other, and may be mutually referenced. Therefore, the related descriptions in the foregoing method 400 are also applicable to this implementation. A same or similar technical means may exist between the embodiment shown in FIG. 8(a) and FIG. 8(b) and the embodiment shown in FIG. 4, and content described in the embodiment shown in FIG. 4 is not described again. The method includes the following multiple steps. For a part that is not described in detail, refer to the foregoing method 400 or the existing protocol.

S801: An NWDAF, an AF 1, and an AF 2 initiate registration procedures to the NRF.

S802: The NWDAF sends an entity discovery request message (namely, an example of a third request message) to the NRF. Correspondingly, the NRF receives the entity discovery request message from the NWDAF.

S803: The NRF determines at least one candidate entity and role information of the at least one candidate entity, for example, the AF 1 and the AF 2, based on a first analytics ID and a first federated learning group ID.

Optionally, the NRF may alternatively determine the at least one candidate entity and the role information of the at least one candidate entity based on another parameter carried in the entity discovery request message, for example, information about a vertical federation and/or a first interoperability indicator.

S804: The NRF sends an entity discovery response message (namely, an example of a third response message) to the NWDAF. Correspondingly, the NWDAF receives the entity discovery response message from the NRF.

For specific implementations of steps S801 to S804, refer to the related descriptions of steps S501 to S504.

In this implementation, a coordinator (that is, an example of the third network element) is introduced to organize or coordinate a first entity to perform a first federated learning task, to sequentially improve efficiency of performing the first federated learning task. Therefore, before the first federated learning task is performed, the NWDAF may confirm with the coordinator whether the coordinator agrees or is willing to coordinate with the first entity to perform the first federated learning task. For details, refer to the following steps S805 and S806.

S805: The NWDAF sends a coordination request message (namely, an example of a fifth request message) to the coordinator. Correspondingly, the coordinator receives the coordination request message from the NWDAF.

For a parameter included in the coordination request message and a specific explanation, refer to the related descriptions of the fifth request message in the foregoing method 400.

S806: The coordinator sends a coordination response message (namely, an example of a fifth response message) to the NWDAF. Correspondingly, the NWDAF receives the coordination response message from the coordinator.

For a parameter included in the coordination request message and a specific explanation, refer to the related descriptions of the fifth response message in the foregoing method 400.

Further, the NWDAF may request the at least one candidate entity (for example, the AF 1 and the AF 2) to prepare to perform the first federated learning task. For details, refer to the following steps S807 to S814.

S807: The NWDAF sends a federated learning request task request message #1 (namely, an example of a second request message) to the AF 1. Correspondingly, the AF 1 receives the federated learning request task request message #1 from the NWDAF.

For example, the NWDAF may send the federated learning request task request message #1 to the AF 1 via the NEF.

For a parameter included in the federated learning request task request message #1 and a specific explanation, refer to the related descriptions of the second request message in the foregoing method 400.

S808: The AF 1 agrees to participate in the federated learning task in an allocated role.

S809: The AF 1 agrees to a specified negotiator. To be specific, the AF 1 agrees that the negotiator organizes or negotiates with the AF 1 to perform the first federated learning task.

S810: The AF 1 sends a federated learning request task response message #1 (namely, an example of a second response message) to the NWDAF. Correspondingly, the NWDAF receives the federated learning request task response message #1 from the AF 1.

For example, the AF 1 may send the federated learning request task response message #1 to the NWDAF via the NEF.

For a parameter included in a federated learning request task request response #1 and a specific explanation, refer to the related descriptions of the second response message in the foregoing method 400.

S811: The NWDAF sends a federated learning request task request message #2 (namely, an example of the second request message) to the AF 2. Correspondingly, the AF 2 receives the federated learning request task request message #2 from the NWDAF.

For example, the NWDAF may send the federated learning request task request message #2 to the AF 2 via the NEF.

For a parameter included in the federated learning request task request message #2 and a specific explanation, refer to the related descriptions of the second request message in the foregoing method 400.

S812: The AF 2 agrees to participate in the federated learning task in an allocated role.

S813: The AF 2 agrees to the specified negotiator. To be specific, the AF 2 agrees that the negotiator organizes or negotiates with the AF 2 to perform the first federated learning task.

S814: The AF 2 sends a federated learning request task response message #2 (namely, an example of the second response message) to the NWDAF. Correspondingly, the NWDAF receives the federated learning request task response message #1 from the AF 2.

For example, the AF 2 may send the federated learning request task response message #2 to the NWDAF via the NEF.

For a parameter included in a federated learning request task request response #2 and a specific explanation, refer to the related descriptions of the second response message in the foregoing method 400.

It should be noted that, for specific implementations of steps S807 to S814, refer to the related descriptions of steps S411 to S413 in the foregoing method 400. For brevity, details are not described herein again.

S815: The NWDAF determines the first entity and a first role.

Further, after determining the first entity and the first role, the NWDAF may trigger the first entity to be requested to perform the first federated learning task, and the following steps S816 to S820 are specifically included.

S816: The NWDAF sends the first entity and the first role to the coordinator. Correspondingly, the coordinator receives the first entity and the first role from the NWDAF.

S817: The NWDAF sends an initialization request message #1 (namely, an example of a first request message) to the AF 1. Correspondingly, the AF 1 receives the initialization request message #1 from the NWDAF.

For a parameter included in the initialization request message #1 and a specific explanation, refer to the related descriptions of the first request message in the foregoing method 400.

S818: The AF 1 sends an initialization response message #1 to the NWDAF. Correspondingly, the NWDAF receives the initialization response message #1 from the AF 1.

The initialization response message #1 indicates that the AF 1 determines to subsequently perform the first federated learning task in the allocated role. For a specific federated learning process, refer to the related descriptions in the foregoing method 300.

S819: The NWDAF sends an initialization request message #2 (namely, an example of the first request message) to the AF 2. Correspondingly, the AF 2 receives the initialization request message #2 from the NWDAF.

For a parameter included in the initialization request message #2 and a specific explanation, refer to the related descriptions of the first request message in the foregoing method 400.

S820: The AF 2 sends an initialization response message #2 to the NWDAF. Correspondingly, the NWDAF receives the initialization response message #2 from the AF 2.

The initialization response message #2 indicates that the AF 2 determines to subsequently perform the first federated learning task in the allocated role. For a specific federated learning process, refer to the related descriptions in the foregoing method 300.

According to the foregoing solution, the NWDAF, as the task initiator, obtains the at least one candidate entity and the role information of the at least one candidate entity, and triggers confirmation with the coordinator and the at least one candidate entity whether the at least one candidate entity agree to perform the first federated learning task, to finally determine the first entity participating in performing the first federated learning task and the first role. In this implementation, the NWDAF triggers a federated learning task initialization request, and notifies the first entity of the first role in performing the first federated learning task. In addition, the coordinator organizes or coordinates with the first entity to perform the first federated learning task. This can effectively improve efficiency of performing the first federated learning task.

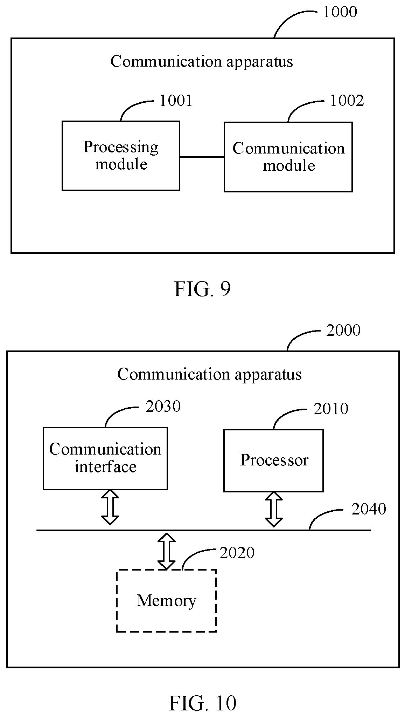

The foregoing describes embodiments on a communication method side in this application with reference to FIG. 1 to FIG. 8(a) and FIG. 8(b). The following describes in detail embodiments on a communication apparatus side in this application with reference to FIG. 9 and FIG. 10. It should be understood that descriptions of the apparatus embodiments correspond to the descriptions of the method embodiments. Therefore, for a part that is not described in detail, refer to the foregoing method embodiments.

FIG. 9 is a diagram of a communication apparatus 1000 according to an embodiment of this application. As shown in FIG. 9, the communication apparatus 1000 includes a communication module 1002 and a processing module 1001. The communication apparatus 1000 may be a first network element, or may be a communication apparatus, for example, a chip, a chip system, or a circuit, that is used in the first network element or that is used together with the first network element to implement a method performed by the first network element. Alternatively, the communication apparatus 1000 may be a second network element, or may be a communication apparatus, for example, a chip, a chip system, or a circuit, that is used in the second network element or that is used together with the second network element to implement a method performed by the second network element. Alternatively, the communication apparatus 1000 may be a third network element, or may be a communication apparatus, for example, a chip, a chip system, or a circuit, that is used in the third network element or that is used together with the third network element to implement a method performed by the third network element.

The communication module 1002 may also be referred to as a transceiver module, a transceiver, a transceiver device, a transceiver apparatus, or the like. The processing module 1001 may also be referred to as a processor, a processing board, a processing unit, a processing apparatus, or the like. Optionally, the communication module 1002 is configured to perform a sending operation and a receiving operation of the first network element, the second network element, or the third network element in the foregoing method. A component configured to implement a receiving function in the communication module 1002 may be considered as a receiving unit, and a component configured to implement a sending function in the communication module 1002 may be considered as a sending unit. That is, the communication module 1002 includes the receiving unit and the sending unit.

When the communication apparatus 1000 is used in the first network element, the processing module 1001 may be configured to implement processing functions of the first network element in the foregoing embodiments, and the communication module 1002 may be configured to implement receiving and sending functions of the first network element in the foregoing embodiments.

When the communication apparatus 1000 is used in the second network element, the processing module 1001 may be configured to implement processing functions of the second network element in the foregoing embodiments, and the communication module 1002 may be configured to implement receiving and sending functions of the second network element in the foregoing embodiments.

When the communication apparatus 1000 is used in the third network element, the processing module 1001 may be configured to implement processing functions of the third network element in the foregoing embodiments, and the communication module 1002 may be configured to implement receiving and sending functions of the third network element in the foregoing embodiments.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

In this application, the module division is an example, and is a logical function division. During actual implementation, another division manner may be used. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 10 is a diagram of another communication apparatus 2000 according to an embodiment of this application. As shown in FIG. 10, optionally, the communication apparatus 2000 may be a chip or a chip system. Optionally, in this application, the chip system may include a chip, or may include a chip and another discrete component.

The communication apparatus 2000 may be configured to implement a function of any network element (for example, the first network element, the second network element, or the third network element) in the communication system described in the foregoing examples. The communication apparatus 2000 may include a communication interface 2030 and a processor 2010. The communication apparatus 2000 may exchange information with another device through the communication interface 2030. For example, the communication interface 2030 may be a transceiver, a circuit, a bus, a module, a pin, or a communication interface of another type. When the communication apparatus 2000 is a chip-type apparatus or circuit, the communication interface 2030 in the apparatus 2000 may alternatively be an input/output circuit, and may input information (or referred to as receiving information) and output information (or referred to as sending information). The processor 2010 is an integrated processor, a microprocessor, an integrated circuit, a logic circuit, or the like. The processor may determine output information based on input information.

Optionally, the processor 2010 is coupled to a memory. The memory may be located in the apparatus. Alternatively, the memory may be integrated with the processor. Alternatively, the memory may be located outside the apparatus. For example, the communication apparatus 2000 may further include at least one memory 2020. The memory 2020 stores a necessary computer program, a computer program or instructions, and/or data for implementing any one of the foregoing examples. The processor 2010 may execute the computer program stored in the memory 2020, to complete the method in any one of the foregoing examples.

The coupling in this application is an indirect coupling or a communication connection between apparatuses, units, or modules, may be in an electrical form, a mechanical form, or another form, and is used for information exchange between the apparatuses, the units, or the modules. The processor 2010 may operate cooperatively with the memory 2020 and the communication interface 2030. A specific connection medium between the processor 2010, the memory 2020, and the communication interface 2030 is not limited in this application.

Optionally, as shown in FIG. 10, the processor 2010, the memory 2020, and the communication interface 2030 are connected to each other through a bus 2040. Optionally, the bus may include a type of bus like an address bus, a data bus, or a control bus. In addition, for ease of representation, FIG. 10 shows one bus 2040, but this does not mean that there is only one bus or only one type of bus.

It should be understood that the processor mentioned in this embodiment of this application may be the following device or a part of circuits configured for a processing function of the following device: a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes multiple forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described herein is intended to include, but is not limited to, these memories and any other memory of a suitable type.

An embodiment of this application further provides a computer-readable storage medium. The computer-readable storage medium stores computer instructions used to implement the method performed by at least one of the first network element, the second network element, or the third network element in the foregoing method embodiments.

An embodiment of this application further provides a computer program product, including instructions. When the instructions are executed by a computer, the method performed by at least one of the first network element, the second network element, or the third network element in the foregoing method embodiments is implemented.

An embodiment of this application further provides a communication system. The communication system includes at least one of the first network element, the second network element, or the third network element in the foregoing embodiments.

For explanations and beneficial effects of related content of any one of the apparatuses provided above, refer to the corresponding method embodiments provided above. Details are not described herein again.

For ease of understanding of embodiments provided in this application, the following descriptions are provided.
(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "at least one" means one or more, and "multiple" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually represents an "or" relationship between the associated objects. "At least one of the following items (pieces)" or a similar expression thereof indicates any combination of these items, including a single item (piece) or any combination of plural items (pieces). For example, at least one (piece) of a, b, and c may indicate a, b, c, a and b, a and c, b and c, or a, b, and c, where each of a, b, and c may be singular or plural.
(3) In this application, "first", "second", and various numbers (for example, #1 and #2) are merely used for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case but are not intended to limit time, and the device is not required to perform a determining action during implementation. This does not mean that there is another limitation.
(5) In this application, "indicating" may include directly indicating and indirectly indicating. When a piece of indication information indicates A, the indication information may directly indicate A or indirectly indicate A, but this does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into multiple pieces of sub-information for separate sending. In addition, sending periodicities and/or sending occasions of these pieces of sub-information may be the same or may be different. For example, a specific sending method is not limited in this application.

The "indication information" in embodiments of this application may be an explicit indication, to be specific, a direct indication through signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefinition" may include definition in advance, for example, protocol definition. "Preconfiguration" may be implemented by pre-storing corresponding code or a corresponding table in a device, or may be implemented in another manner that may indicate related information. A specific implementation thereof is not limited in this application.

(7) In this application, "communication" may also be described as "data transmission", "information transmission", "data processing", or the like. "Transmission" includes "sending" and "receiving".

In this application, configuration may be signaling configuration, or may be described as configuration signaling. For example, the signaling configuration may be that a network device sends signaling for configuration. The signaling may be a radio resource control (radio resource control, RRC) message, downlink control information (downlink control information, DCI), or a system information block (system information block, SIB). For another example, the signaling configuration may be preconfigured. The preconfiguration herein is to define or configure a value of a corresponding parameter in advance in a protocol, and may be stored in a device during communication. This is not limited in this application.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

A person of ordinary skill in the art may be aware that, in combination with the examples described in embodiments disclosed in this specification, units and algorithm steps may be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for the specific working processes of the foregoing system, apparatus, and unit, refer to the corresponding processes in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, the unit division is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technologies, or a part of the technical solutions may be implemented in a form of a software product. The computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a first network element, a first entity and a first role, wherein the first role indicates a role of the first entity in performing a first federated learning task; and
sending, by the first network element, a first request message to the first entity, wherein the first request message is used to request the first entity to perform the first federated learning task in the first role.

2. The method according to claim 1, wherein the first role comprises a primary participant or a secondary participant, wherein
the primary participant supports providing a label in the first federated learning task, wherein the label corresponds to the first federated learning task; or the primary participant supports providing a label and data in the first federated learning task; and
the secondary participant supports providing data in the first federated learning task.

3. The method according to claim 1 or 2, wherein the method further comprises:
obtaining, by the first network element, at least one candidate entity and role information of the at least one candidate entity, wherein the role information of the at least one candidate entity indicates a role supported by the at least one candidate entity in the first federated learning task; and
the determining, by the first network element, the first entity and the first role comprises:
determining, by the first network element, the first entity and the first role from the at least one candidate entity and the role information of the at least one candidate entity.

4. The method according to claim 3, wherein the obtaining, by the first network element, the at least one candidate entity and the role information of the at least one candidate entity comprises:
receiving, by the first network element, the at least one candidate entity and the role information of the at least one candidate entity from a second network element, wherein the second network element supports discovery of an entity for performing the first federated learning task.

5. The method according to claim 4, wherein the receiving, by the first network element, the at least one candidate entity and the role information of the at least one candidate entity from the second network element comprises:
sending, by the first network element, a third request message to the second network element, wherein the third request message is used to obtain an entity that supports performing the first federated learning task; and
receiving, by the first network element, a third response message from the second network element, wherein the third response message comprises the at least one candidate entity and the role information of the at least one candidate entity.

6. The method according to any one of claims 1 to 5, wherein before the determining, by the first network element, the first entity and the first role, the method further comprises:
sending, by the first network element, a second request message to the first entity, wherein the second request message is used to request the first entity to prepare to perform the first federated learning task; and
receiving, by the first network element, a second response message from the first entity, wherein the second response message indicates that the first entity agrees to perform the first federated learning task in the first role.

7. The method according to claim 6, wherein the second request message comprises at least one role supported by the first entity in the first federated learning task, and the at least one role comprises the first role.

8. The method according to claim 6 or 7, wherein the second response message comprises the first role.

9. The method according to any one of claims 6 to 8, wherein the second request message further comprises information about a third network element, and the third network element supports coordinating the first entity in performing the first federated learning task.

10. The method according to any one of claims 1 to 9, wherein the method further comprises:
obtaining, by the first network element, the information about the third network element and role information of the third network element, wherein the role information of the third network element indicates that the third network element supports coordinating the first entity in performing the first federated learning task.

11. The method according to claim 10, wherein the obtaining, by the first network element, the information about the third network element and the role information of the third network element comprises:
receiving, by the first network element, the information about the third network element and the role information of the third network element from the second network element.

12. The method according to claim 10 or 11, wherein the method further comprises:
sending, by the first network element, a fifth request message to the third network element, wherein the fifth request message is used to request the third network element to coordinate with the first entity to perform the first federated learning task; and
receiving, by the first network element, a fifth response message from the third network element, wherein the fifth response message indicates that the third network element agrees to coordinate with the first entity to perform the first federated learning task.

13. The method according to any one of claims 10 to 12, wherein before the sending, by the first network element, the first request message to the first entity, the method further comprises:
sending, by the first network element, a sixth request message to the third network element, wherein the sixth request message is used to request to create or coordinate the first federated learning task, and the sixth request message comprises the first entity and the first role.

14. The method according to any one of claims 1 to 13, wherein before the determining, by the first network element, the first entity and the first role, the method further comprises:
obtaining, by the first network element, a first analytics identifier, wherein the first analytics identifier corresponds to the first federated learning task; and
triggering, by the first network element, the first federated learning task based on the first analytics identifier.

15. A communication method, comprising:
receiving, by a second network element, a third request message, wherein the third request message is used to obtain an entity that supports performing a first federated learning task, and the second network element supports discovery of an entity for performing the first federated learning task;
determining, by the second network element, at least one candidate entity and role information of the at least one candidate entity, wherein the role information of the at least one candidate entity indicates a role supported by the at least one candidate entity in the first federated learning task; and
sending, by the second network element, a third response message, wherein the third response message comprises the at least one candidate entity and the role information of the at least one candidate entity.

16. The method according to claim 15, wherein the third request message comprises multiple types, and the multiple types correspond to the at least one candidate entity.

17. The method according to claim 15 or 16, wherein the method further comprises:
sending, by the second network element, information about a third network element and role information of the third network element to a first network element, wherein the role information of the third network element indicates that the third network element supports coordinating the first entity in performing the first federated learning task.

18. The method according to any one of claims 15 to 17, wherein the method further comprises:
receiving, by the second network element, a registration request message of at least one second entity, wherein the registration request message comprises role information of the at least one second entity, the at least one second entity supports performing the first federated learning task, and the at least one second entity comprises the at least one candidate entity.

19. The method according to any one of claims 15 to 18, wherein the receiving, by the second network element, the third request message comprises:
receiving, by the second network element, the third request message from the first network element, wherein the first network element supports initiation of the first federated learning task; or
receiving, by the second network element, the third request message from the third network element, wherein the third network element supports coordinating the first entity in performing the first federated learning task, and the at least one candidate entity comprises the first entity.

20. A communication method, comprising:
obtaining, by a third network element, a first entity and a first role, wherein the first role indicates a role of the first entity in performing a first federated learning task, and the third network element supports coordinating the first entity in performing the first federated learning task; and
sending, by the third network element, a seventh request message to the first entity, wherein the seventh request message is used to request to perform the first federated learning task, and the seventh request message comprises the first role.

21. The method according to claim 20, wherein the obtaining, by the third network element, the first entity and the first role comprises:
receiving, by the third network element, the first entity and the first role from a first network element, wherein the first network element supports initiation of the first federated learning task.

22. The method according to claim 21, wherein the receiving, by the third network element, the first entity and the first role from the first network element comprises:
receiving, by the third network element, a sixth request message from the first network element, wherein the sixth request message is used to request to create or coordinate the first federated learning task, and the sixth request message comprises the first entity and the first role.

23. The method according to claim 21 or 22, wherein before the receiving, by the third network element, the first entity and the first role information from the first network element, the method further comprises:
sending, by the third network element, at least one candidate entity and role information of the at least one candidate entity to the first network element, wherein the role information of the at least one candidate entity indicates a role supported by the at least one candidate entity in the first federated learning task, and the at least one candidate entity comprises the first entity.

24. The method according to claim 23, wherein before the sending, by the third network element, the at least one candidate entity and the role information of the at least one candidate entity to the first network element, the method further comprises:
receiving, by the third network element, a fourth request message from the first network element, wherein the fourth request message is used to request to prepare to perform the first federated learning task;
obtaining, by the third network element, the at least one candidate entity and the role information of the at least one candidate entity;
sending, by the third network element, an eighth request message to the at least one candidate entity, wherein the eighth request message is used to request the at least one candidate entity to perform the first federated learning task, and the eighth request message comprises the role information of the at least one candidate entity; and
receiving, by the third network element, an eighth response message from the at least one candidate entity, wherein the eighth response message indicates that the at least one candidate entity agrees to support performing the first federated learning task in the role indicated by the role information of the candidate entity.

25. The method according to claim 24, wherein the eighth request message further comprises information about the third network element, and the eighth response message further indicates agreement that the third network element is to negotiate the first federated learning task.

26. The method according to claim 24 or 25, wherein the obtaining, by the third network element, the at least one candidate entity and the role information of the at least one candidate entity comprises:
receiving, by the third network element, the at least one candidate entity and the role information of the at least one candidate entity from a second network element, wherein the second network element supports discovery of an entity for performing the first federated learning task.

27. The method according to claim 26, wherein the receiving, by the third network element, the at least one candidate entity and the role information of the at least one candidate entity from the second network element comprises:
sending, by the third network element, a third request message to the second network element, wherein the third request message is used to obtain an entity that supports performing the first federated learning task; and
receiving, by the third network element, a third response message from the second network element, wherein the third response message comprises the at least one candidate entity and the role information of the at least one candidate entity.

28. The method according to any one of claims 21 to 27, wherein before the receiving, by the third network element, the first entity and the first role from the first network element, the method further comprises:
receiving, by the third network element, a fifth request message from the first network element, wherein the fifth request message is used to request the third network element to coordinate with the first entity to perform the first federated learning task; and
sending, by the third network element, a fifth response message to the first network element, wherein the fifth response message indicates that the third network element agrees to coordinate with the first entity to perform the first federated learning task.

29. A communication apparatus, comprising at least one module, wherein the at least one module is configured to perform the method according to any one of claims 1 to 28.

30. A communication apparatus, comprising at least one processor, wherein the at least one processor is configured to execute a computer program or instructions, to perform the method according to any one of claims 1 to 28.

31. The communication apparatus according to claim 30, wherein
the communication apparatus further comprises a memory, and the memory is configured to store the computer program or the instructions; and/or
the communication apparatus further comprises a communication interface, wherein the communication interface is coupled to the at least one processor, and the communication interface is configured to input and/or output information.

32. The communication apparatus according to claim 30 or 31, wherein the communication apparatus is a chip or a chip system.

33. A computer-readable storage medium, wherein the computer-readable storage medium stores computer program code or instructions, and when the computer program code or the instructions are executed by a computer, the method according to any one of claims 1 to 28 is performed.

34. A computer program product, comprising instructions, wherein when the instructions are run, the method according to any one of claims 1 to 28 is performed.

35. A communication system, comprising at least one of a first network element, a second network element, or a third network element, wherein the first network element is configured to perform the method according to any one of claims 1 to 14, the second network element is configured to perform the method according to any one of claims 15 to 19, and the third network element is configured to perform the method according to any one of claims 20 to 28.
